# EUROPEAN PATENT APPLICATION

(11) **EP 4 632 673 A1**
(43) Date of publication of application: **15.10.2025**
(21) Application number: 25168493.2
(22) Date of filing: 04.04.2025
(51) Int. Cl.: G06T 7/00, G02B 21/36

(54) **SAMPLE SUPPORT GRID RECOGNITION**

(30) Priority: 11.04.2024 US 202418632994
(71) Applicant: FEI Company, Hillsboro, OR 97124-5793 (US)
(72) Inventor: CHEN, Yunyun, Hillsboro (US); BAHM, Alan S., Hillsboro (US)
(74) Representative: Boult Wade Tennant LLP

(57) **Abstract**

Embodiments herein relate to a process for sample support recognition. A system can comprise a memory that stores, and a processor that executes, computer executable components. The computer executable components can comprise an imaging component that captures an image of an unknown sample support comprising a material layer; and a matching component that matches the unknown sample support to a known sample support based on an unknown non-uniformity profile comprising one or more non-uniformities of the material layer in the image of the unknown sample support.

## Description

### BACKGROUND

Scientific instruments for use in material analysis can aid in determining the makeup and properties of an unknown composition. In one or more examples, a scientific instrument can provide location, manipulation and/or analysis at high resolution relative to a sample ranging in the hundreds of nanometers in one dimension, or less.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 illustrates a block diagram of an example scientific instrument for performing operations, in accordance with one or more embodiments described herein.
FIG. 2 illustrates a flow diagram of an example method of performing operations using the scientific instrument of FIG. 1, in accordance with one or more embodiments described herein.
FIG. 3 illustrates a graphical user interface (GUI) that can be used in the performance of one or more of the methods described herein, in accordance with one or more embodiments described herein.
FIG. 4 illustrates a block diagram of an example computing device that can perform one or more of the methods disclosed herein, in accordance with one or more embodiments described herein.
FIG. 5 illustrates a block diagram of an example, non-limiting system that can facilitate a process for identification of a sample support grid, in accordance with one or more embodiments described herein.
FIG. 6 illustrates a block diagram of another example, non-limiting system that can facilitate a process for identification of a sample support grid, in accordance with one or more embodiments described herein.
FIG. 7 provides an illustration of a pair of sample support containers, in accordance with one or more embodiments described herein.
FIG. 8 provides a diagram of a set of sample support grid manufacturing steps, in accordance with one or more embodiments described herein.
FIG. 9 illustrates a schematic diagram of an imaging setup of the non-limiting system of FIG. 6, in accordance with one or more embodiments described herein.
FIG. 10 illustrates a diagram of an exemplary sample support grid image, in accordance with one or more embodiments described herein.
FIG. 11 provides a diagram of a set of sample support grid images to illustrate a matching step that can be performed by the non-limiting system of FIG. 6, in accordance with one or more embodiments described herein.
FIG. 12 provides a schematic diagram further illustrating the matching step that can be performed by the non-limiting system of FIG. 6, in accordance with one or more embodiments described herein.
FIG. 13 illustrates flow diagram of one or more processes that can be performed by the automatic locating system of FIG. 6, in accordance with one or more embodiments described herein.
FIG. 14 illustrates flow diagram of one or more processes that can be performed by the automatic locating system of FIG. 6, in accordance with one or more embodiments described herein.
FIG. 15 illustrates a continuation of the flow diagram of FIG. 14 of the one or more processes that can be performed by the non-limiting system of FIG. 6, in accordance with one or more embodiments described herein.
FIG. 16 illustrates a further continuation of the flow diagram of FIG. 14 of the one or more processes that can be performed by the non-limiting system of FIG. 6, in accordance with one or more embodiments described herein.
FIG. 17 illustrates another flow diagram of one or more processes that can be performed by the automatic locating system of FIG. 6, in accordance with one or more embodiments described herein.
FIG. 18 illustrates a continuation of the flow diagram of FIG. 17 of the one or more processes that can be performed by the non-limiting system of FIG. 6, in accordance with one or more embodiments described herein.
FIG. 19 illustrates a block diagram of example scientific instrument system in which one or more of the methods described herein can be performed, in accordance with one or more embodiments described herein.
FIG. 20 illustrates a block diagram of an example operating environment into which embodiments of the subject matter described herein can be incorporated.
FIG. 21 illustrates an example schematic block diagram of a computing environment with which the subject matter described herein can interact and/or be implemented at least in part.

### SUMMARY

The following presents a summary to provide a basic understanding of one or more embodiments described herein. This summary is not intended to identify key or critical elements, and/or to delineate scope of particular embodiments or scope of claims. Its sole purpose is to present concepts in a simplified form as a prelude to the more detailed description that is presented later. In one or more embodiments, systems, computer-implemented methods, apparatuses and/or computer program products described herein can provide process for recognition of a sample support grid, used for supporting samples with a viewing system. For example, such viewing system can comprise an electron microscope (EM), such as a scanning electron microscope (SEM) or transmission electron microscope (TEM), and/or a focused ion beam (FIB) device.

In accordance with an embodiment, a system can comprise a memory that stores computer executable components, and a processor that executes the computer executable components. The computer executable components can comprise an imaging component that captures an image of an unknown sample support comprising a material layer; and a matching component that matches the unknown sample support to a known sample support based on an unknown non-uniformity profile comprising one or more non-uniformities of the material layer in the image of the unknown sample support.

In accordance with another embodiment, a computer-implemented method can comprise capturing, by a system operatively coupled to a processor, an image of an unknown sample support comprising a material layer; and matching, by the system, the unknown sample support to a known sample support based on matching of one or more unknown non-uniformities of the material layer in the image of the unknown sample support to one or more known non-uniformities in an image of the known sample support.

In accordance with still another embodiment, a computer program product facilitating a process for sample support recognition can comprise a computer readable storage medium having program instructions embodied therewith, the program instructions executable by a processor to compare, by the processor, an unknown non-uniformity profile comprising one or more non-uniformities of an unknown sample support, at an image of the unknown sample support, to a known non-uniformity profile of an image of a known sample support; and based on a result of the comparing, identify, by the processor, the unknown sample support as being the known sample support.

The one or more embodiments disclosed herein can achieve improved sample support grid recognition as compared to conventional techniques employing mere labeling and guesswork, for example. Rather, the one or more embodiments described herein can provide improved performance of imaging systems by providing an approved and recognized baseline for imaging via a verified sample support grid. That is, such systems can employ known dimensions and/or other measurements of a sample support grid to which a sample of interest can be attached. Verification that a sample support grid being used is indeed the sample support grid corresponding to such dimensions and/or measurements can reduce imaging and/or measurement errors down the line during analysis of the respective sample of interest.

In connection with the above, the one or more embodiments described herein can provide verifiable tracking of one or more, such as a plurality, of sample support grids across various stages of manufacturing, processing and/or preparing of the sample support grids at different locations and/or by different entities. That is, physical properties of the sample support grids themselves can be employed for identification of sample support grids, providing for recognition of one or more sample support grids of interest as being the proper sample support grid (e.g., those that are specified for use) relative to one or more imaging systems.

For example, based on specified application of a light source to the sample support grids, both initially, and during one or more subsequent identifications, one or more non-uniformities of one or more materials of the sample support grids can be employed to track (e.g., as a fingerprint or other profile) identification of the sample support grids. This can allow for more efficient and more accurate identification of the sample supports and/or verified recognition that a specified sample support grid is indeed being employed, as compared to existing techniques. In turn, this can allow for more accurate placement of a sample, such as a lamella, on and/or at the sample support, as compared to existing techniques.

The identification of a selected unknown sample support grid can be made increasingly efficient through use of a matching process employing one or more non-uniformities of a material of the selected unknown sample support grid as compared to one or more non-uniformities of an image of a known sample support grid. In one or more embodiments, a comparison score generated relative to this comparison can be aggregated with one or more parameter scores corresponding to comparison of one or more secondary parameters of the selected unknown sample support grid to one or more corresponding secondary parameters of the known sample support grid.

### DETAILED DESCRIPTION

The following detailed description is merely illustrative and is not intended to limit embodiments and/or application or utilization of embodiments. Furthermore, there is no intention to be bound by any expressed or implied information presented in the preceding Summary section, or in the Detailed Description section. One or more embodiments are now described with reference to the drawings, wherein like reference numerals are utilized to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiment. Various additional operations can be performed, and/or described operations can be omitted in additional embodiments.

Turning now to the subject of material analysis and to the one or more embodiments described herein, one method of obtaining composition imaging can be electron microscopy where a sample is targeted by a source, such as an ion source or electron source, ultimately resulting in an emission of (and/or generation of) secondary charged particles, such as secondary electrons and/or secondary ions, that can be detected and registered to then generate an image of the sample.

Set up for this type of material analysis, with existing techniques, presently relies on a manually-executed labeling system for tracking identification of different sample support grids relative to one another during one or more pre-processing steps for the sample support grids, also herein referred to as sample supports, sample grids and/or support grids. During such material analysis, a sample of interest can be attached to the sample support. Attachment, analysis and/or imaging of the sample of interest can rely, at least in part, on one or more specified parameters of the sample support, such as material composition, dimensions, surface angles, mass and/or the like. Accordingly, where a sample support is specified, relative to one or more other sample supports, it can be desirable to, in actuality, be employing the specified sample support and not, accidentally, a different sample support.

These one or more specified parameters can further be employed to identify an attachment region of the sample support at which it can be desired to attach and/or otherwise place a sample of interest to be analyzed by the material analysis system. It is noted that such setups can be employed relative to a plurality of imaging systems, such as, but not limited to a scanning electron microscope or transmission electron microscope (S/TEM), focused ion beam (FIB) device and/or dual beam system comprising both an S/TEM and FIB device.

Existing techniques employed for recognition of sample supports as being the same as a specified sample support, are manual, slow, subjective, error-prone and/or not verifiable, without being limited thereto. As such, one or more errors during a material analysis stage (e.g., setup, sample attachment, imaging and/or other analysis) can be caused by mis-identification of a sample support and/or mis-recognition of a selected sample support as being a specified sample support.

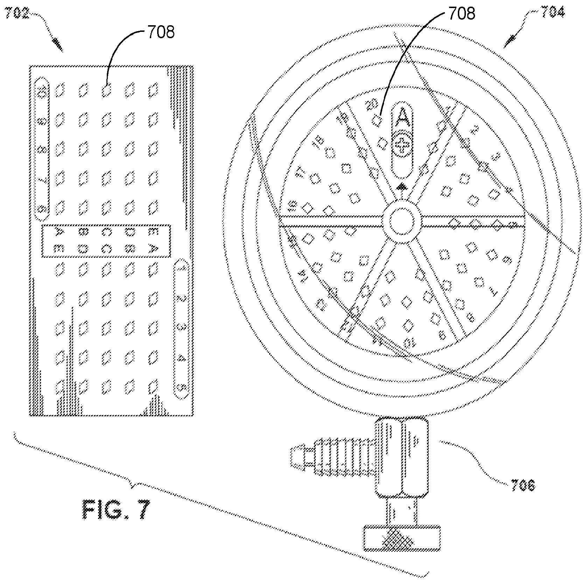

Furthermore, as alluded to above, such one or more deficiencies can be compounded by various stages of pre-processing for a set of two or more sample supports. That is, each pre-processing step can provide an opportunity for undesirably mixing up a sample support order or labeling, such as relative to placement within one or more storage containers. See, e.g., FIG. 7 illustrating an open environment sample support container 702 and a sealed vacuum-container 704, each of which can retain a plurality of sample supports therein. That is, while sample supports can initially be placed into labeled orifices 708 of one or more sample support containers 702, 704, the sample supports can be mistakenly rearranged and/or put back into a wrong orifice 708, the sample support containers 702, 704 can be dropped or bumped thereby dislodging one or more sample supports from the one or more orifices 708, and/or the sample supports can be placed into an orifice that is not labeled from the respective sample supports. See, e.g., the labeling by a combination of letter and number at the sample support containers 702 and 704. It is noted that any suitable labeling can be employed.

To account for one or more inabilities or deficiencies of existing frameworks (e.g., existing sample support identification and/or recognition frameworks), one or more embodiments are described herein that can employ a sample support recognition system for automatically recognizing one or more specified sample supports as the corresponding one or more known sample supports, such as relative to one or more data records defining the one or more known sample supports. As a result, the one or more embodiments described herein, based on an automated approach, can achieve high information gathering relative to a sample support, resulting in more accurate recognition of a sample support, regardless of a phase of use of the sample support (e.g., pre-processing, post-processing, material analysis setup, material analysis and/or post-material analysis). As used herein, the terms "identification" and "recognition" can be interchangeable. The term "recognition" will be used in a remainder of the subject Description.

The one or more automatic sample support recognition frameworks described herein can comprise capturing an image of an unknown sample support, comparing the image of the unknown sample support to one or more images of one or more known sample supports, and matching the unknown sample support to one of the known sample supports. This can be accomplished employing an automatic system for defining a non-uniformity profile of one or more non-uniformities of the unknown sample support, employing the non-uniformity profile during the comparing relative to a non-uniformity profile of a known sample support, generating a comparison score defining a level of similarity of the unknown sample support to the known sample support, generating a match of the unknown sample support to the known sample support based on the comparison score, and generating a notification providing notice of the match.

To achieve the match, the automatic system can identify one or more non-uniformities (e.g., scratches, blemishes, color changes, dents, channels, markings and/or the like) in one or more materials and/or at one or more different surfaces and/or layers of the unknown sample support. The automatic system can access a datastore comprising one or more data records defining a non-uniformity profile of one or more known sample supports. The automatic system further can identify one or more additional parameters, such as material, color, mass and/or dimension of the unknown sample support and compare the one or more additional parameters to one or more corresponding additional parameters of the one or more known sample supports.

A match can be based on a threshold likelihood of a match being met, generation of one or more scores, comparison of the one or more scores to the threshold, comparison of one or more different comparison scores to determine a highest and/or optimal score, and/or evaluation of one or more other matches and/or scores relative to one or more other unknown sample supports of a set of unknown sample supports.

Any one or more of the aforementioned steps can be based on comparison of one or more images of the unknown sample support to one or more images of the one or more known sample supports.

In one or more embodiments, the automatic system can aid, such as suggest and/or control, one or more steps for facilitating capturing of the one or more images. In one or more embodiments, the automatic system can output a suggestion to capture one or more additional images of an unknown sample support using one or more altered conditions.

The automatic system can comprise one or more scientific instrument systems described herein, as well as related methods, computing devices, and computer-readable media. For example, in one or more embodiments, a system can comprise a memory that can store computer executable components and a processor that executes the computer executable components stored in the memory. The computer executable components can comprise an imaging component that can capture an image of an unknown sample support, a comparing component that compares non-uniformity profiles of the unknown sample support and at least one known sample support, and/or a matching component that can match the unknown sample support to the sample support based on the captured image and on a result of the comparing.

As indicated above, the one or more embodiments disclosed herein can achieve improved performance relative to existing approaches. For example, based on analysis of one or more unknown non- uniformities of an unknown sample support to one or more known non-uniformities of a known sample support, a more reliable, more accurate and less subjective match of an image of the unknown sample to an image of the known sample, and thus of the unknown sample to the known sample, can be generated. This can allow for more efficient and/or more accurate use of the unknown sample support during any subsequent material analysis procedure. For example, this can allow for more accurate placement of a sample, such as a lamella, on and/or at the sample support, as compared to existing techniques. In one or more embodiments, in connection with sample placement, a reduced quantity and/or smaller area of sample substrate can be removed from an identified region of the sample support (relative to preparation of the sample support for the sample placement) due to the more efficient and/or accurate recognition of the unknown sample support, as compared to existing techniques.

Therefore, the embodiments disclosed herein provide improvements to scientific instrument technology (e.g., improvements in the computer technology supporting such scientific instruments, among other improvements), which can be employed in various fields including microscopic imaging, optics, signal processing, spectroscopy, and nuclear magnetic resonance (NMR), without being limited thereto. For example, in one or more embodiments a diameter or longest length across a surface of an exemplary sample support can be in a range of 1mm to about 5mm, such as about 3mm.

Various ones of the embodiments disclosed herein can improve upon existing approaches to achieve the technical advantages of increased contrast imaging of sample supports, narrower attachment region identification, and/or less subjective sample support preparation. That is, use of the one or more sample support recognition frameworks discussed herein can allow for automatic recognition of a plurality of one or more unknown sample supports to a plurality of one or more known sample supports. The one or more frameworks employed herein can employ a sample support recognition system, as described herein.

The above-mentioned technical advantages are not achievable by routine and existing approaches, and all user entities of systems including such embodiments can benefit from these advantages (e.g., by assisting the user entity in the performance of a technical task, such as recognition of an unknown sample support as a previously recorded known sample support).

The technical features of the embodiments disclosed herein (e.g., comparison of non-uniformity profiles) are thus decidedly unconventional in the field of microscopic imaging, in addition to the fields of optics, signal processing, spectroscopy, and/or NMR, without being limited thereto, as are combinations of the features of the embodiments disclosed herein.

As discussed further herein, various aspects of the embodiments disclosed herein can improve the functionality of a computer itself. That is, the computational and user interface features disclosed herein do not involve only the collection and comparison of information but instead apply new analytical and technical techniques to change the operation of the computer-analysis of material compounds. For example, based on the application of the various lightings and/or sample support orientations, a more efficient and/or accurate match of an unknown sample support to a known sample support can be generated based on computer-aided determination of sample support image acceptability. These processes can all be performed automatically because the matching of the sample supports does not rely on a manual input, as do existing frameworks. Accordingly, a corresponding computer-directed process of sample support imaging itself can be made easier and more efficient through reduction of mis-identifications, lack of clear non-uniformities, and/or lack of subjective inputs, as compared to one or more conventional frameworks. As such, a non-limiting system described herein, comprising a sample support recognition system 602, can be self-improving.

The present disclosure thus introduces functionality that neither an existing computing device, nor a human, could perform. Rather, such existing computing devices would instead require subjective manual input to match an unknown sample support less accurately to a known sample support record. In view of the time, energy, human error, and lack of automation involved, in addition to the lack of accurate sample support identification, it is not practical to operate within the confines of existing approaches.

Accordingly, the embodiments of the present disclosure can serve any of a number of technical purposes, such as controlling a specific technical system or process; determining from measurements how to control a machine; digital audio, image, or video enhancement or analysis; separation of material sources in a mixed signal; generating data for reliable and/or efficient transmission or storage; providing estimates and confidence intervals for material samples; or providing a faster processing of sensor data. In particular, the present disclosure provides technical solutions to technical problems, including, but not limited to, accurate and repeatable sample support recognition, accurate and repeatable non-uniformity profile generation, and/or accurate and repeatable analysis of a plurality of non-uniformity profiles to one another at least partially in parallel with one another.

The embodiments disclosed herein thus provide improvements to material analysis technology (e.g., improvements in the computer technology supporting material analysis, among other improvements).

As used herein, the phrase "based on" should be understood to mean "based at least in part on," unless otherwise specified.

As used herein, the term "component" can refer to an atomic element, molecular element, phase of an atomic or molecular element, or combination thereof.

As used herein, the terms "compound" and "precursor" can be used interchangeably.

As used herein, the term "data" can comprise metadata.

As used herein, the terms "entity," "requesting entity," and "user entity" can refer to a machine, device, component, hardware, software, smart device, party, organization, individual and/or human.

One or more embodiments are now described with reference to the drawings, where like referenced numerals are used to refer to like drawing elements throughout. In the following description, for purposes of explanation, numerous specific details are set forth in order to provide a more thorough understanding of the one or more embodiments. It is evident in various cases, however, that the one or more embodiments can be practiced without these specific details.

Further, it should be appreciated that the embodiments depicted in one or more figures described herein are for illustration only, and as such, the architecture of embodiments is not limited to the systems, devices and/or components depicted therein, nor to any particular order, connection and/or coupling of systems, devices and/or components depicted therein.

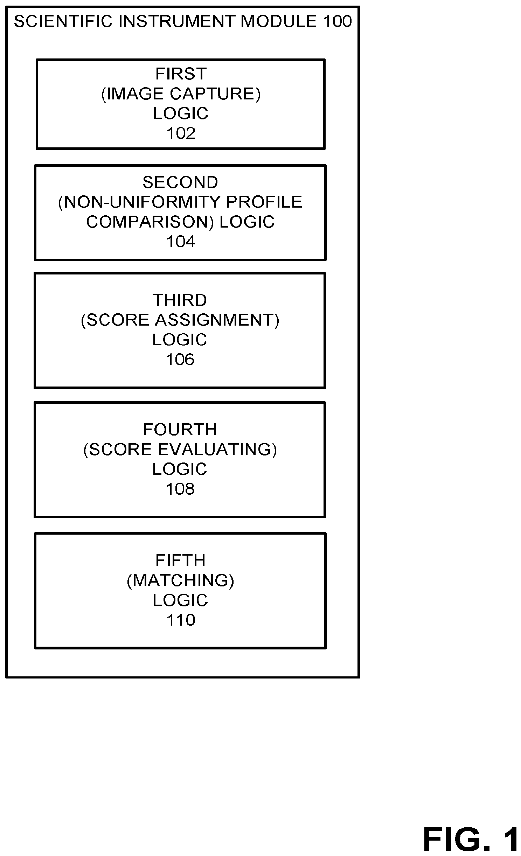

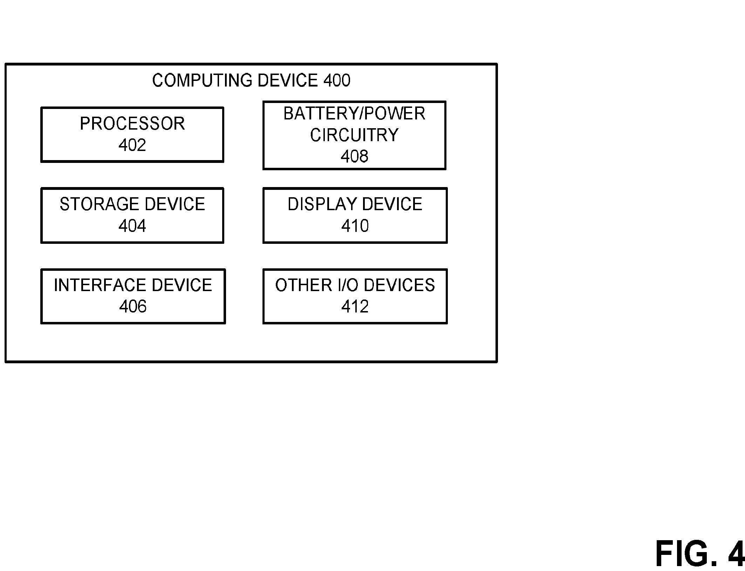

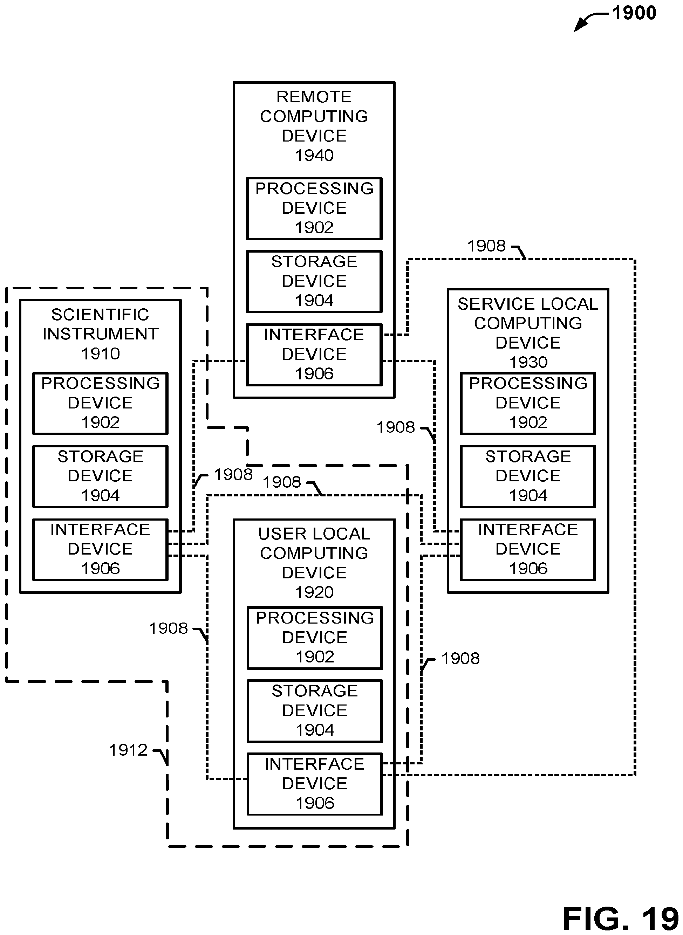

Turning now in particular to the one or more figures, and first to FIG. 1, illustrated is a block diagram of a scientific instrument module 100 for preparation and setup related to performing material analysis operations using a microscopic imaging technique, in accordance with various embodiments described herein. The scientific instrument module 100 can be implemented by circuitry (e.g., including electrical and/or optical components), such as a programmed computing device. The logic of the scientific instrument module 100 can be included in a single computing device or can be distributed across multiple computing devices that are in communication with each other as appropriate. Examples of computing devices that can, singly or in combination, implement the scientific instrument module 100 are discussed herein with reference to the computing device 400 of FIG. 4, and examples of systems of interconnected computing devices, in which the scientific instrument module 100 can be implemented across one or more of the computing devices, is discussed herein with reference to the scientific instrument system 1900 of FIG. 19.

The scientific instrument module 100 can function in correspondence with an imaging system 630. The scientific instrument module 100 can include first logic 102, second logic 104, third logic 106, fourth logic 108 and fifth logic 110. As used herein, the term "logic" can include an apparatus that is to perform a set of operations associated with the logic. For example, any of the logic elements included in the module 100 can be implemented by one or more computing devices programmed with instructions to cause one or more processing devices of the computing devices to perform the associated set of operations. In a particular embodiment, a logic element can include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module can take the same form or can take different forms. For example, some logic in a module can be implemented by a programmed general-purpose processing device, while other logic in a module can be implemented by an application-specific integrated circuit (ASIC). In another example, different ones of the logic elements in a module can be associated with different sets of instructions executed by one or more processing devices. A module can omit one or more of the logic elements depicted in the associated drawing; for example, a module can include a subset of the logic elements depicted in the associated drawing when that module is to perform a subset of the operations discussed herein with reference to that module.

The first logic 102 can cause and/or direct the image capture of an unknown sample support. As used here, the term "unknown sample support" refers to a sample support for which identification has not yet been verified. That is, correspondence of the unknown sample support to a record of a known sample support has not yet been verified. As used herein, the term "known sample support" therefore refers to a sample support for which a data record has been generated, comprising a profiling of one or more non-uniformities and/or one or more other parameters defining the known sample support.

The second logic 104 can cause and/or direct comparison of a non-uniformity profile of an unknown sample support to a non-uniformity of a known sample support. That is, the second logic 104 can direct comparison of one or more non-uniformities identified from one or more sample support images output from first logic 102.

The third logic 106 can cause and/or direct score assignment based on an output of the second logic 104. That is, the third logic 106 can, based on the functioning of the first logic 102 and the second logic 104, execute the generation of the score assignment defining a level of similarity between the unknown sample support and the known sample support, based on the images of the unknown sample support and the known sample support.

The fourth logic 108 can cause and/or direct evaluating of the score assignment output by the third logic 106. The evaluating can comprise comparison of a score resulting from the score assignment to one or more other scores and/or to a score threshold.

The fifth logic 110 can cause and/or direct generation of a match based on the output of the fourth logic 108.

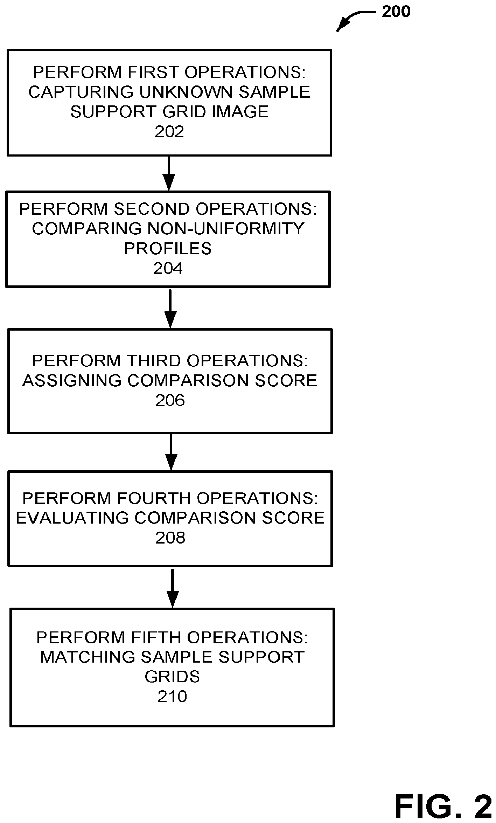

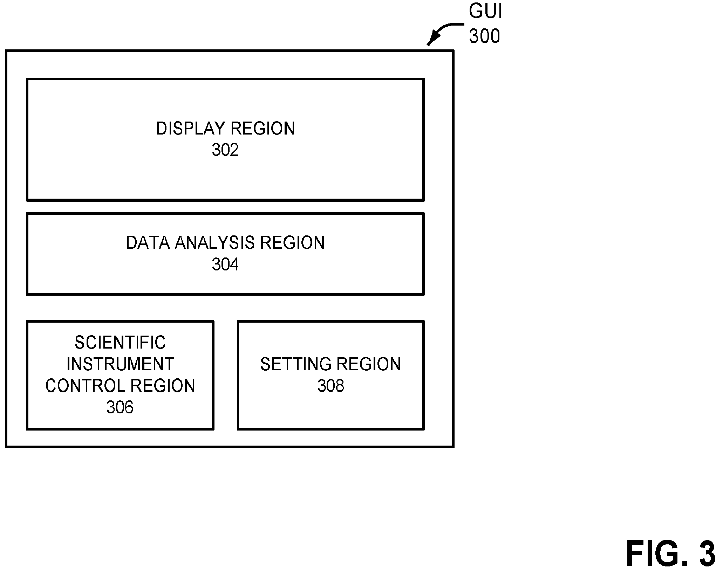

FIG. 2 illustrates a flow diagram of a method 200 of performing operations, by the scientific instrument module 100, in accordance with various embodiments. Although the operations of the method 200 can be illustrated with reference to particular embodiments disclosed herein (e.g., the scientific instrument module 100 discussed herein with reference to FIG. 1, the GUI 300 discussed herein with reference to FIG. 3, the computing device 400 discussed herein with reference to FIG. 4, and/or the scientific instrument system 1900 discussed herein with reference to FIG. 19), the method 200 can be used in any suitable setting to perform any suitable operations. Operations are illustrated once each and in a particular order in FIG. 2, but the operations can be reordered and/or repeated as desired and appropriate (e.g., different operations performed can be performed in parallel, as suitable).

At 202, first operations can be performed. For example, the first logic 102 of the module 100 can perform the first operations 202. The first operations 202 can include directing and/or causing image capturing of an unknown sample support grid. In one or more embodiments, the image capturing can comprise setting and/or modification of one or more image capture angles and/or lighting conditions.

At 204, second operations can be performed. For example, the second logic 104 of the module 100 can perform the second operations 204. The second operations 204 can include directing and/or causing comparison of non-uniformity profiles of the unknown sample support and at least one known sample support. That is, the comparison can comprise evaluating location, size, adjacency, color and/or any other defining aspect of one or more non-uniformities of the non-uniformity profiles being compared.

At 206, third operations can be performed. For example, the third logic 106 of the module 100 can perform the third operations 206. The third operations 206 can include directing and/or causing assignment of a score, such as a comparison score, parameter score and/or aggregated score, relative to the known sample support and/or relative to a combination of the unknown sample support and the known sample support. The comparison score can define a level of similarity between the images of the unknown sample support and the known sample support and thus can define a level of similarity between the unknown sample support and the known sample support.

At 208, fourth operations can be performed. For example, the fourth logic 108 of the module 100 can perform the fourth operations 208. The fourth operations 208 can include directing and/or causing evaluation of the score output from the third operations 206. The evaluating can comprise comparison of a score resulting from the score assignment to one or more other scores and/or to a score threshold.

At 210, fifth operations can be performed. For example, the fifth logic 110 of the module 100 can perform the fifth operations 210. The fifth operations 210 can include directing and/or causing generation of a match of the unknown sample support to the known sample support, based on an output of the fourth operations 208.

The scientific instrument methods disclosed herein can include interactions with a user entity (e.g., via the user local computing device 1920 discussed herein with reference to FIG. 19). These interactions can include providing information to the user entity (e.g., information regarding the operation of a scientific instrument such as the scientific instrument 1910 of FIG. 19, information regarding a sample being analyzed or other test or measurement performed by a scientific instrument, information retrieved from a local or remote database, or other information) or providing an option for a user entity to input commands (e.g., to control the operation of a scientific instrument such as the scientific instrument 1910 of FIG. 19, or to control the analysis of data generated by a scientific instrument), queries (e.g., to a local or remote database), or other information. In some embodiments, these interactions can be performed through a graphical user interface (GUI) that includes a visual display on a display device (e.g., the display device 410 discussed herein with reference to FIG. 4) that provides outputs to the user entity and/or prompts the user entity to provide inputs (e.g., via one or more input devices, such as a keyboard, mouse, trackpad, or touchscreen, included in the other I/O devices 412 discussed herein with reference to FIG. 4). The scientific instrument system 1900 disclosed herein can include any suitable GUIs for interaction with a user entity.

Turning next to FIG. 3, depicted is an example GUI 300 that can be used in the performance of one or more of the methods described herein, in accordance with various embodiments described herein. As noted above, the GUI 300 can be provided on a display device (e.g., the display device 410 discussed herein with reference to FIG. 4) of a computing device (e.g., the computing device 400 discussed herein with reference to FIG. 4) of a scientific instrument system (e.g., the scientific instrument system 1900 discussed herein with reference to FIG. 19), and a user entity can interact with the GUI 300 using any suitable input device (e.g., any of the input devices included in the other I/O devices 412 discussed herein with reference to FIG. 4) and input technique (e.g., movement of a cursor, motion capture, facial recognition, gesture detection, voice recognition, actuation of buttons, etc.).

The GUI 300 can include a data display region 302, a data analysis region 304, a scientific instrument control region 306, and a settings region 308. The particular number and arrangement of regions depicted in FIG. 3 is merely illustrative, and any number and arrangement of regions, including any desired features thereof, can be included in a GUI 300.

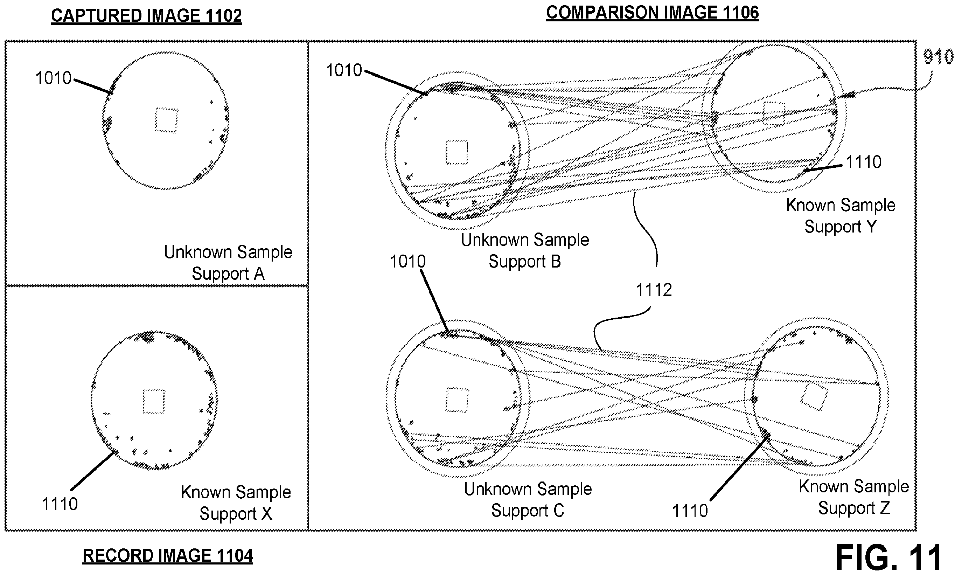

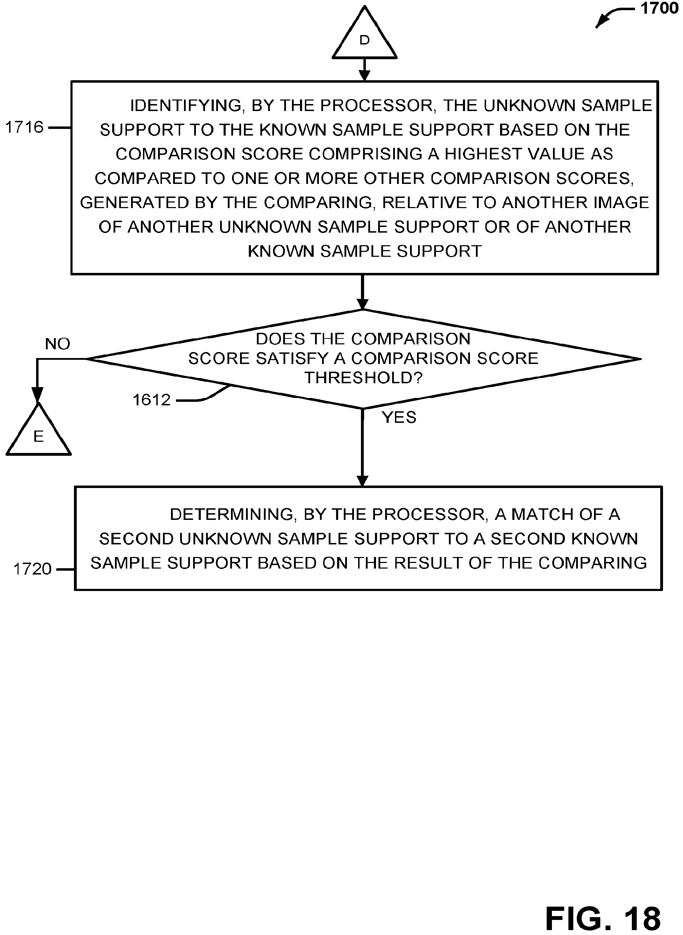

The data display region 302 can display data generated by a scientific instrument (e.g., the scientific instrument 1910 discussed herein with reference to FIG. 18). For example, the data display region 302 can display one or more output comparison images 1106 (FIG. 11) and/or one or more text, graphs, charts, matrices and/or individual sample support images, without being limited thereto.

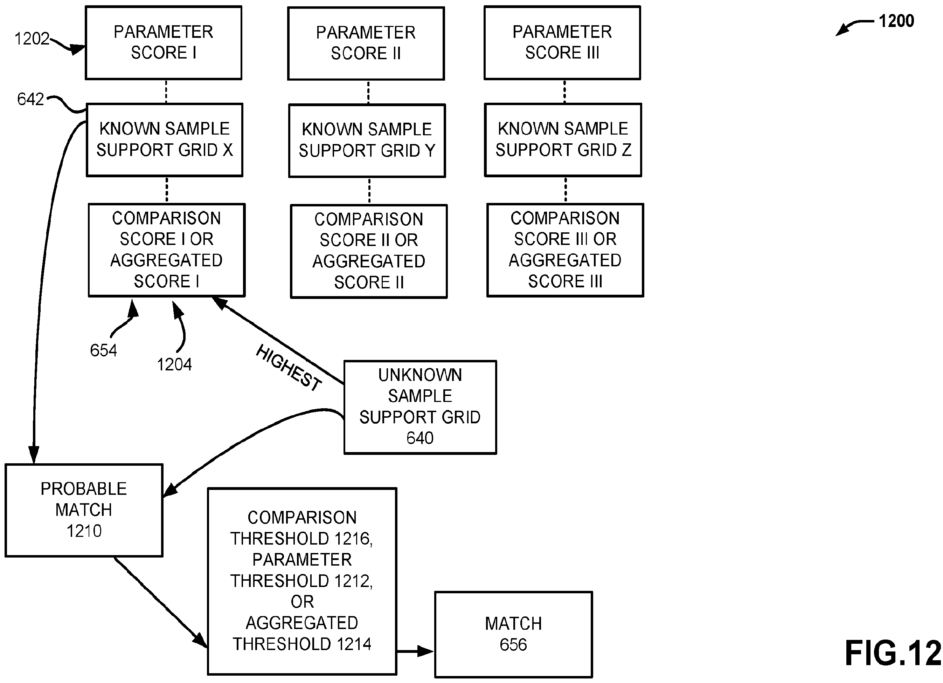

The data analysis region 304 can display the results of data analysis (e.g., the results of analyzing the data illustrated in the data display region 302 and/or other data). For example, the data analysis region 304 can display one or more results of comparison score analysis (e.g., as depicted at FIG. 12). For example, the data analysis region 304 can display a list, flow chart or other schematic of one or more score evaluations. In one or more embodiments, the data display region 302 and the data analysis region 304 can be combined in the GUI 300 (e.g., to include data output from a scientific instrument, and some analysis of the data, in a common graph or region). In one or more embodiments, the data display region 302 can display an image of a sample support, where one or more non-uniformities can be highlighted by any suitable method, such as difference in color, luminosity, pointers, text, etc.

The scientific instrument control region 306 can include options that can allow the user entity to control a scientific instrument (e.g., the scientific instrument 1910 discussed herein with reference to FIG. 19). For example, the scientific instrument control region 306 can include one or more controls for inputting one or more metrics of interest.

The settings region 308 can include options that allow the user entity to control the features and functions of the GUI 300 (and/or other GUIs) and/or perform common computing operations with respect to the data display region 302 and data analysis region 304 (e.g., saving data on a storage device, such as the storage device 404 discussed herein with reference to FIG. 4, sending data to another user entity, labeling data, etc.). For example, the settings region 308 can include one or more options to alter color, fill or format of illustrations, such as an illustration related to one or more images and/or schematics of FIGS. 11 and/or 12.

As noted above, the scientific instrument module 100 can be implemented by one or more computing devices. Accordingly, discussion next turns to FIG. 4, which illustrates a block diagram of a computing device 400 that can perform some or all of the scientific instrument methods disclosed herein, in accordance with various embodiments. In one or more embodiments, the scientific instrument module 100 can be implemented by a single computing device 400 or by multiple computing devices 400. Further, as discussed below, a computing device 400 (or multiple computing devices 400) that implements the scientific instrument module 100 can be part of one or more of the scientific instruments 1910, the user local computing device 1920, the service local computing device 1930, or the remote computing device 1940 of FIG. 19.

The computing device 400 of FIG. 4 is illustrated as having a number of components, but any one or more of these components can be omitted or duplicated, as suitable for the application and setting. As illustrated, these components can include one or more of a processor 402, storage device 404, interface device 406, battery/power circuitry 408, display device 410 and other input/output (I/O) devices 412, as will be described below.

In one or more embodiments, one or more of the components included in the computing device 400 can be attached to one or more motherboards and enclosed in a housing (e.g., including plastic, metal, and/or other materials). In one or more embodiments, some these components can be fabricated onto a single system-on-a-chip (SoC) (e.g., an SoC can include one or more processors 402 and one or more storage devices 404). Additionally, in one or more embodiments, the computing device 400 can omit one or more of the components illustrated in FIG. 4. In one or more embodiments, the computing device 400 can include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device 400 can omit a display device 410, but can include display device interface circuitry (e.g., a connector and driver circuitry) to which a display device 410 can be coupled.

The computing device 400 can include the processor 402 (e.g., one or more processing devices). As used herein, the term "processing device" can refer to any device or portion of a device that processes electronic data from registers and/or memory to transform that electronic data into other electronic data that can be stored in registers and/or memory. The processor 402 can include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 400 can include a storage device 404 (e.g., one or more storage devices). The storage device 404 can include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In one or more embodiments, the storage device 404 can include memory that shares a die with a processor 402. In such an embodiment, the memory can be used as cache memory and can include embedded dynamic random-access memory (eDRAM) or spin transfer torque magnetic random-access memory (STT-MRAM), for example. In one or more embodiments, the storage device 404 can include non-transitory computer readable media having instructions thereon that, when executed by one or more processing devices (e.g., the processor 402), cause the computing device 400 to perform any appropriate ones of or portions of the methods disclosed herein.

The computing device 400 can include an interface device 406 (e.g., one or more interface devices 406). The interface device 406 can include one or more communication chips, connectors, and/or other hardware and software to govern communications between the computing device 400 and other computing devices. For example, the interface device 406 can include circuitry for managing wireless communications for the transfer of data to and from the computing device 400. The term "wireless" and its derivatives can be used to describe circuits, devices, systems, methods, techniques, communications channels, etc., that can communicate data through the use of modulated electromagnetic radiation through a nonsolid medium. The term does not imply that the associated devices do not contain any wires, although in one or more embodiments the associated devices might not contain any wires. Circuitry included in the interface device 406 for managing wireless communications can implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). In one or more embodiments, circuitry included in the interface device 406 for managing wireless communications can operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In one or more embodiments, circuitry included in the interface device 406 for managing wireless communications can operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In one or more embodiments, circuitry included in the interface device 406 for managing wireless communications can operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In one or more embodiments, the interface device 406 can include one or more antennas (e.g., one or more antenna arrays) to receipt and/or transmission of wireless communications.

In one or more embodiments, the interface device 406 can include circuitry for managing wired communications, such as electrical, optical, or any other suitable communication protocols. For example, the interface device 406 can include circuitry to support communications in accordance with Ethernet technologies. In one or more embodiments, the interface device 406 can support both wireless and wired communication, and/or can support multiple wired communication protocols and/or multiple wireless communication protocols. For example, a first set of circuitry of the interface device 406 can be dedicated to shorter-range wireless communications such as Wi-Fi or Bluetooth, and a second set of circuitry of the interface device 406 can be dedicated to longer-range wireless communications such as global positioning system (GPS), EDGE, GPRS, CDMA, WiMAX, LTE, EV-DO, or others. In one or more embodiments, a first set of circuitry of the interface device 406 can be dedicated to wireless communications, and a second set of circuitry of the interface device 406 can be dedicated to wired communications.

The computing device 400 can include battery/power circuitry 408. The battery/power circuitry 408 can include one or more energy storage devices (e.g., batteries or capacitors) and/or circuitry for coupling components of the computing device 400 to an energy source separate from the computing device 400 (e.g., AC line power).

The computing device 400 can include a display device 410 (e.g., multiple display devices). The display device 410 can include any visual indicators, such as a heads-up display, a computer monitor, a projector, a touchscreen display, a liquid crystal display (LCD), a light-emitting diode display, or a flat panel display.

The computing device 400 can include other input/output (I/O) devices 412. The other I/O devices 412 can include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 400, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 400 can have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer, etc.), a desktop computing device, or a server computing device or other networked computing component.

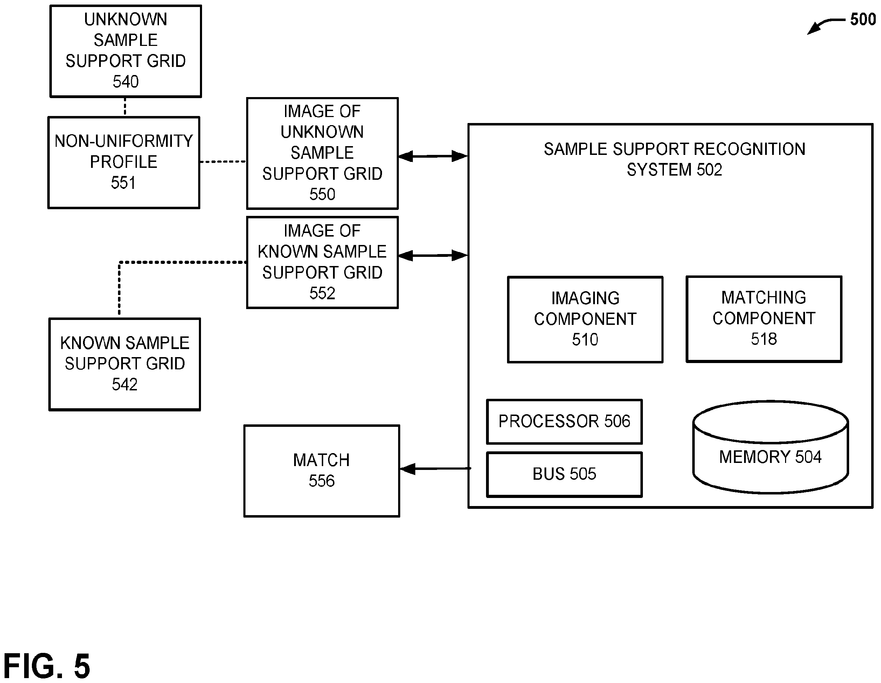

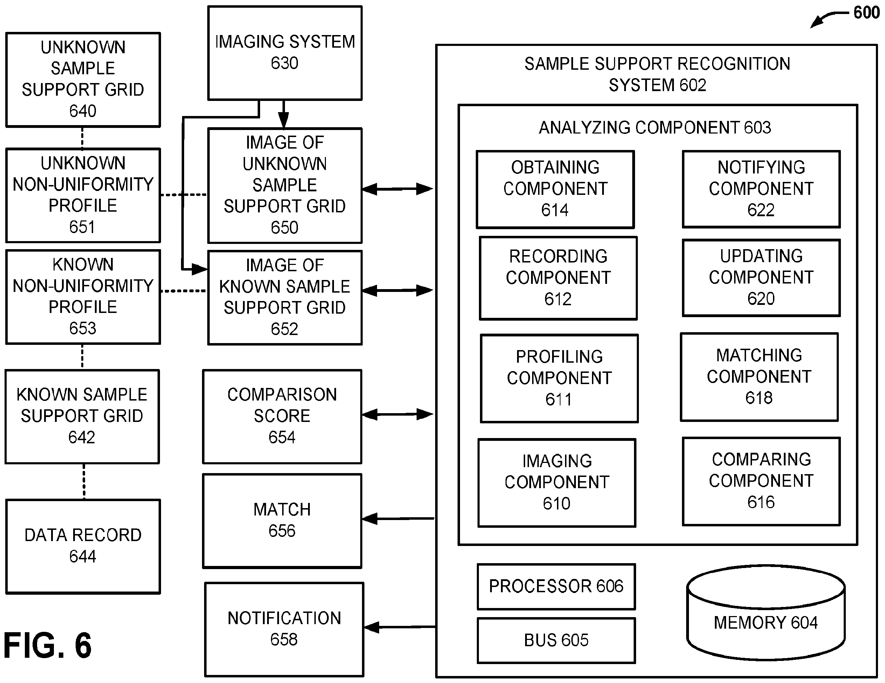

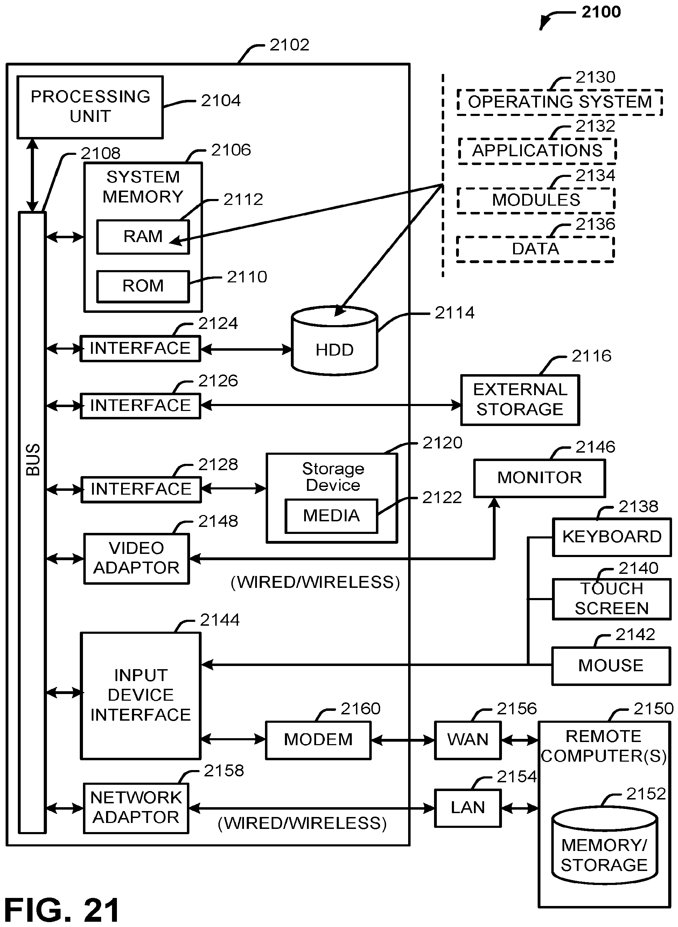

Referring next to FIGS. 5 and 6, in one or more embodiments, the non-limiting systems 500 and/or 600 illustrated at FIGS. 5 and 6, and/or systems thereof, can further comprise one or more computer and/or computing-based elements described herein with reference to a computing environment, such as the computing environment 2100 illustrated at FIG. 21. In one or more described embodiments, computer and/or computing-based elements can be used in connection with implementing one or more of the systems, devices, components and/or computer-implemented operations shown and/or described in connection with FIGS. 5 and/or 6 and/or with other figures described herein.

Turning first to FIG. 5, the figure illustrates a block diagram of an example, non-limiting system 500 that can comprise a sample support recognition system 502 and an imaging system 630. The sample support recognition system 502 can facilitate recognition of an unknown sample support grid 540 (also referred to as an unknown sample support 540) as being one or more known sample support grids 542 (also referred to as known sample supports 542).

In one or more embodiments, the sample support recognition system 502 can be at least partially comprised by the computing device 400.

In one or more embodiments, the imaging system 630 can at least partially comprise the sample support recognition system 502.

It is noted that the sample support recognition system 502 is only briefly detailed to provide but a lead-in to a more complex and/or more expansive sample support recognition system 602 as illustrated at FIG. 6. That is, further detail regarding processes that can be performed by one or more embodiments described herein will be provided below relative to the non-limiting system 600 of FIG. 6.

Still referring to FIG. 5, the sample support recognition system 502 can comprise at least a memory 504, bus 505, processor 506, imaging component 510 and matching component 518. The processor 506 can be the same as the processor 402, comprised by the processor 402 or different therefrom. The memory 504 can be the same as the storage device 404, comprised by the storage device 404 or different therefrom.

Using the above-noted components, the sample support recognition system 502 can facilitate a process to first image a sample support for which identification is desired (e.g., an unknown sample support 540), and secondarily, determine a match of a known sample support 542 corresponding to the unknown sample support 540.

Generally, the sample supports 540, 542 can be comprised by a grid system comprising a plurality of one or more sample supports. As noted above, these sample supports can be employed for various purposes relative to attachment of samples thereto to provide stability of the samples during imaging or other material analysis of the samples.

Generally, the imaging component 510 can capture and/or direct capture of an image 550 of the unknown sample support 540. The unknown sample support 540 can comprise one or more material layers.

The matching component 518 can, employing the image 550, match the unknown sample support 540 to a known sample support 542 based on an unknown non-uniformity profile 551 comprising one or more non-uniformities of the material layer in the image 550 of the unknown sample support 540. That is, the matching component 518 can match an image 550 of the unknown sample support 540 to a data record and/or to an image 552 of the known sample support 542.

The imaging component 510 and the matching component 518 can be operatively coupled to the processor 506 which can be operatively coupled to the memory 504. The bus 505 can provide for the operative coupling. The processor 506 can facilitate execution of the imaging component 510 and the matching component 518. The imaging component 510 and the matching component 518 can be stored at the memory 504.

In general, the non-limiting system 500 can employ any suitable method of communication (e.g., electronic, communicative, internet, infrared, fiber, etc.) to provide communication between the sample support recognition system 502, an imaging system employed by the sample support recognition system 502 for capturing an image of a sample support, and/or any device associated with a user entity.

Turning next to FIG. 6, a non-limiting system 600 is illustrated that can comprise a sample support recognition system 602 and an imaging system 630. Repetitive description of like elements and/or processes employed in respective embodiments is omitted for sake of brevity. Description relative to an embodiment of FIG. 5 can be applicable to an embodiment of FIG. 6. Likewise, description relative to an embodiment of FIG. 6 can be applicable to an embodiment of FIG. 5.

Generally, the sample support recognition system 602 can facilitate a process for recognition of an unknown sample support 640 as being a known sample support 642. This process can be facilitated by generation of, analysis of and comparing of non-uniformity profiles of the sample supports 640 and 642 to one another.

In one or more embodiments, the sample support recognition system 602 can be at least partially comprised by the computing device 400.

In one or more embodiments, the sample support recognition system 602 can at least partially comprise the imaging system 630.

One or more communications between one or more components of the non-limiting system 600 can be provided by wired and/or wireless means including, but not limited to, employing a cellular network, a wide area network (WAN) (e.g., the Internet), and/or a local area network (LAN). Suitable wired or wireless technologies for supporting the communications can include, without being limited to, wireless fidelity (Wi-Fi), global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, BLUETOOTH^{®}, Session Initiation Protocol (SIP), ZIGBEE^{®}, RF4CE protocol, WirelessHART protocol, 6LoWPAN (Ipv6 over Low power Wireless Area Networks), Z-Wave, an advanced and/or adaptive network technology (ANT), an ultra-wideband (UWB) standard protocol and/or other proprietary and/or non-proprietary communication protocols.

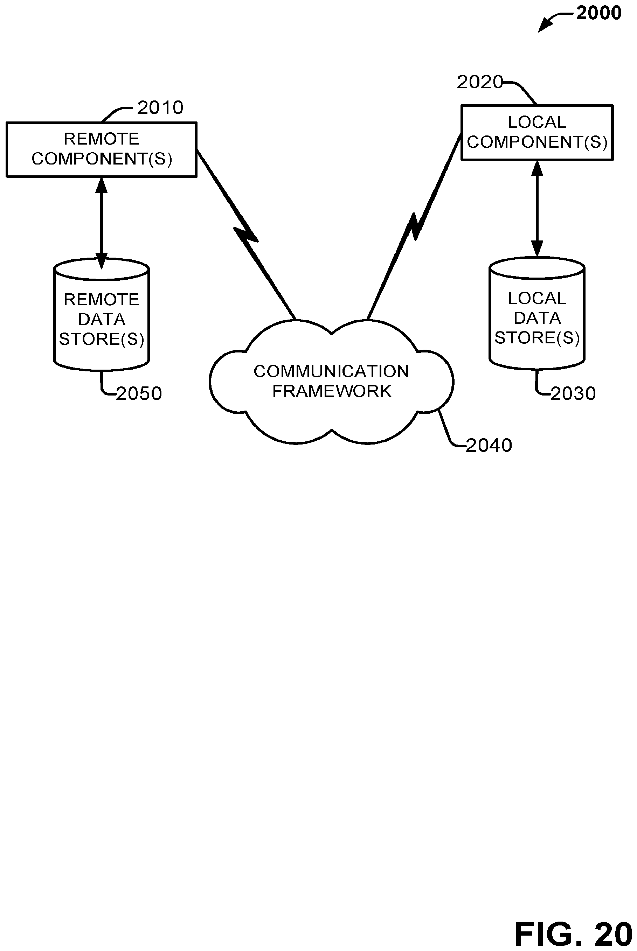

The sample support recognition system 602 can be associated with, such as accessible via, a cloud computing environment, such as the cloud computing environment 2000 of FIG. 20.

The sample support recognition system 602 can comprise a plurality of components. The components can comprise a memory 604, processor 606, bus 605, imaging component 610, profiling component 611, recording component 612, obtaining component 614, comparing component 616, matching component 618, updating component 620 and/or notifying component 622. Using these components, the sample support recognition system 602 can obtain, compare and analyze images of sample supports, and more particularly compare and analyze one or more non-uniformities identified from the images of the sample supports. In this way, a selected and/or desired sample support can be employed for a subsequent material analysis procedure. That is, a sample support employed in such subsequent procedure can be verified as being the sample support that was selected and/or desired to be employed for the subsequent material analysis procedure.

Discussion next turns to the processor 606, memory 604 and bus 605 of the sample support recognition system 602. For example, in one or more embodiments, the sample support recognition system 602 can comprise the processor 606 (e.g., computer processing unit, microprocessor, classical processor, quantum processor and/or like processor). In one or more embodiments, a component associated with sample support recognition system 602, as described herein with or without reference to the one or more figures of the one or more embodiments, can comprise one or more computer and/or machine readable, writable and/or executable components and/or instructions that can be executed by processor 606 to provide performance of one or more processes defined by such component and/or instruction. In one or more embodiments, the processor 606 can comprise the imaging component 610, profiling component 611, recording component 612, obtaining component 614, comparing component 616, matching component 618, updating component 620 and/or notifying component 622.

In one or more embodiments, the sample support recognition system 602 can comprise the computer-readable memory 604 that can be operably connected to the processor 606. The memory 604 can store computer-executable instructions that, upon execution by the processor 606, can cause the processor 606 and/or one or more other components of the sample support recognition system 602 (e.g., imaging component 610, profiling component 611, recording component 612, obtaining component 614, comparing component 616, matching component 618, updating component 620 and/or notifying component 622) to perform one or more actions. In one or more embodiments, the memory 604 can store computer-executable components (e.g., imaging component 610, profiling component 611, recording component 612, obtaining component 614, comparing component 616, matching component 618, updating component 620 and/or notifying component 622).

The sample support recognition system 602 and/or a component thereof as described herein, can be communicatively, electrically, operatively, optically and/or otherwise coupled to one another via a bus 605. Bus 605 can comprise one or more of a memory bus, memory controller, peripheral bus, external bus, local bus, quantum bus and/or another type of bus that can employ one or more bus architectures. One or more of these examples of bus 605 can be employed.

In one or more embodiments, the sample support recognition system 602 can be coupled (e.g., communicatively, electrically, operatively, optically and/or like function) to one or more external systems (e.g., a non-illustrated electrical output production system, one or more output targets and/or an output target controller), sources and/or devices (e.g., classical and/or quantum computing devices, communication devices and/or like devices), such as via a network. In one or more embodiments, one or more of the components of the sample support recognition system 602 and/or of the non-limiting system 600 can reside in the cloud, and/or can reside locally in a local computing environment (e.g., at a specified location).

In addition to the processor 606 and/or memory 604 described above, the sample support recognition system 602 can comprise one or more computer and/or machine readable, writable and/or executable components and/or instructions that, when executed by processor 606, can provide performance of one or more operations defined by such component and/or instruction.

Discussion next turns to one or more additional components of the sample support recognition system 602.

However, first, it is noted that in one or more embodiments, the imaging component 610, profiling component 611, recording component 612, obtaining component 614, comparing component 616, matching component 618, updating component 620 and/or notifying component 622 can be implemented independently, without one or more other of the imaging component 610, profiling component 611, recording component 612, obtaining component 614, comparing component 616, matching component 618, updating component 620 and/or notifying component 622. Additionally and/or alternatively, the imaging component 610, profiling component 611, recording component 612, obtaining component 614, comparing component 616, matching component 618, updating component 620 and/or notifying component 622 can be comprised by a high-level analyzing component 603, one or more of the below-described functions of the imaging component 610, profiling component 611, recording component 612, obtaining component 614, comparing component 616, matching component 618, updating component 620 and/or notifying component 622 can be performed by the high-level analyzing component 603, and/or the imaging component 610, profiling component 611, recording component 612, obtaining component 614, comparing component 616, matching component 618, updating component 620 and/or notifying component 622 can be omitted with the high-level analyzing component 603 performing one or more of the below-described functions of the one or more omitted imaging component 610, profiling component 611, recording component 612, obtaining component 614, comparing component 616, matching component 618, updating component 620 matching component 618, updating component 620 and/or notifying component 622.

Turning now to the components, the imaging component 610 can capture and/or direct capture of one or more images 650 of one or more unknown sample supports 640 and/or one or more images 652 of one or more known sample supports 642. In one or more embodiments, the imaging component 610 can direct the imaging system 630 to capture an image. In one or more embodiments, the imaging component can merely obtain such image from the imaging system 630.

In one or more embodiments, the imaging system 630 can be and/or comprise an optical microscope and thus the images 650, 652 can be optical microscope images, although another alternative can be suitable.

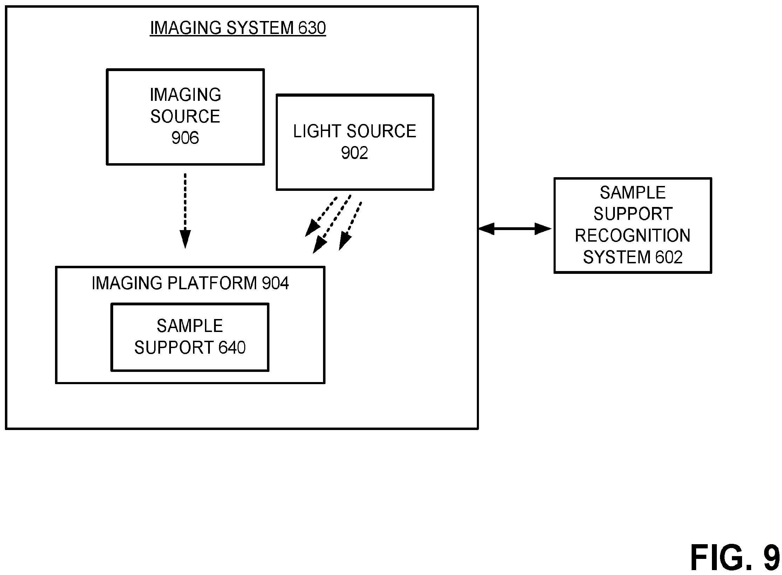

For example, looking to FIG. 9, in one or more embodiments, the imaging component 610 can direct activation of a light source 902 and/or imaging source 906 of the imaging system 630 to thereby facilitate capture of an image 650 of a sample support 640. In one or more embodiments, the light source 902, imaging source 906, and/or an orientation of an imaging platform 904 supporting the sample support 640 can be controlled manually and/or by the imaging system 630. In one or more embodiments, the light source 902, imaging source 906, and/or an orientation of the imaging platform 904 can be at least partially controlled by the imaging component 610. For example, the imaging component 610 can direct a particular color and/or luminosity of the light source 902, can direct a particular energy level or quantity of the imaging source 906, and/or can direct movement of the imaging platform 904. In one or more embodiments, the imaging component 610 can otherwise suggest one or more particular settings for the light source 902, imaging source 906, and/or orientation of the imaging platform 904 to the imaging system 630 and/or to an administrating entity.

The resulting one or more images 650, 652 can comprise any suitable data and/or metadata.

The imaging system 630 can comprise any suitable processor and/or memory for facilitating one or more processes including, but not limited to, capturing of one or more images, such as of one or more sample supports. In one or more embodiments, the imaging system 630 instead can employ the processor 606 and/or memory 604 of the sample support recognition system 602.

Turning next to the profiling component 611, this component can generally generate and/or update a known non-uniformity profile 653 for a known sample support 642 or an unknown non-uniformity profile 651 for an unknown sample support 640. The generating can comprise analyzing, by the profiling component 611, at least one material layer of the respective sample support (e.g., unknown sample support 640, which will be employed as but a mere example for one or more descriptions herein). Based on the analysis, the profiling component 611 can define a respective non-uniformity profile, serving akin to a microscopic fingerprint of the sample support. It is these non-uniformity profiles that can be compared to one another to determine matches between one or more images 650 of unknown sample supports and one or more images 652 of known sample supports, whether or not the respective non-uniformity profiles change over time or not.

For example, the profiling component 611 can identify a first non-uniformity 1010 of the image 650, 652 based on the variation in contrast between a boundary or region 1014 bounding the non-uniformity 1010 having a different contrast than the boundary or region 1014. As such, the recognition of one or more non-uniformities 1010 can be recorded at the respective non-uniformity profile 651, 653.

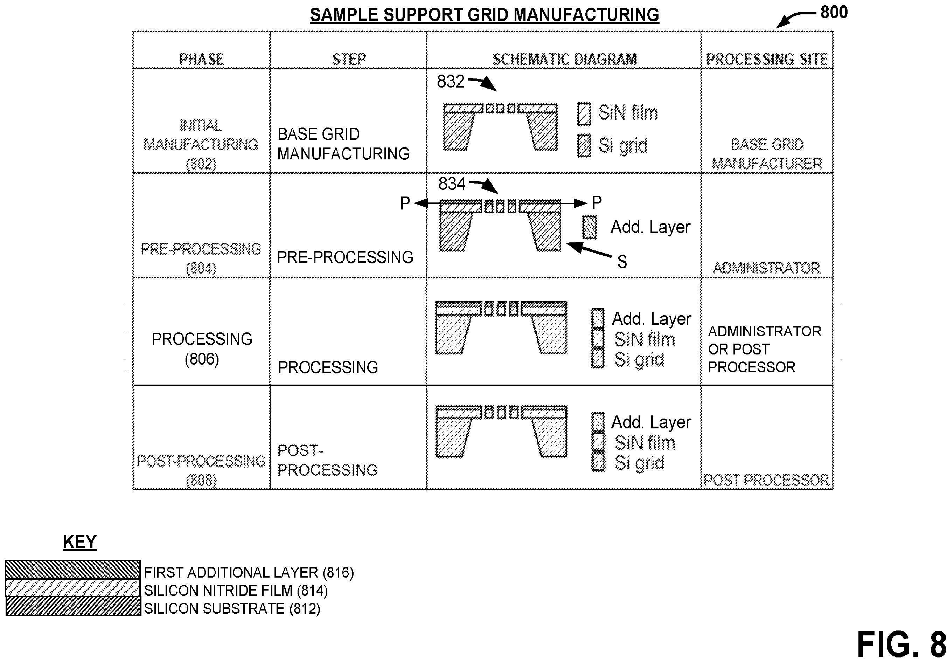

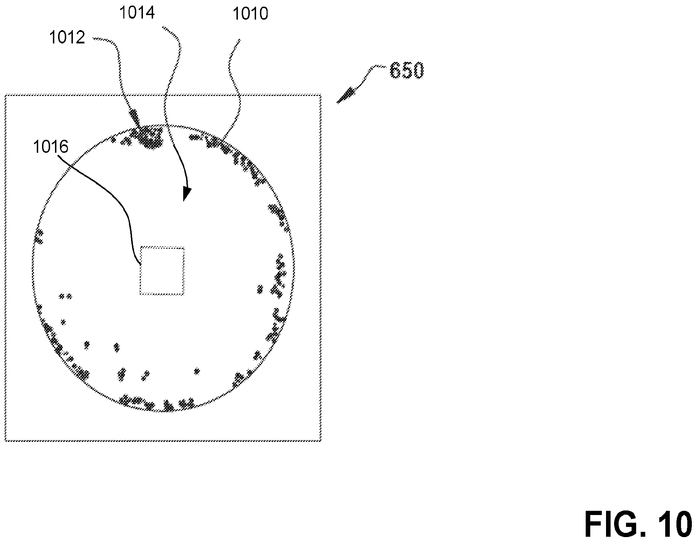

Referring to FIGS. 8 and 10, in addition to FIG. 6, the profiling component 611 can employ image recognition software to identify one or more non-uniformities 1010, such as one or more blemishes, marks, markings, disfigurements, bumps, depressions, scratches, channels, dents, raised areas and/or other optical defects of at least one material layer of the respective sample support being analyzed.

For example, in one or more embodiments, image recognition can comprise image processing to remove pixels corresponding to an image background to reduce unused information. A processing script, such as a Python script, can then be employed to locate a circular structure or other type and/or shape of structure. In one or more embodiments, a processing script, such as a Python script, can be employed to dilute the structure, which can result in pixels of the image exterior to (e.g., bounding) the structure being darkened. This can provide the difference in luminosities of the first regions 1012 and the second region 1014, in one or more embodiments.

The one or more non-uniformities can be located at any location of any surface of any material layer of a sample support 640, 642. For example, referring to FIG. 10, illustrating a planar view of a plane P-P (FIG. 8), one or more non-uniformities 1010 can be disposed at one or more first regions that are peripherally-located first regions 1012 of a partially-cylindrical sample support 640, 642. Although, it will be appreciated that a sample support 640, 642 can have any suitable shape. Additionally, and/or alternatively, in one or more embodiments, one or more non-uniformities 1010 can be disposed at a central second region 1014. Although, it will be appreciated that due to a nature of the manufacturing processes performed (e.g., illustrated at FIG. 8) for manufacturing of a sample support 640, 642, a majority of non-uniformities 1010 resulting from a manufacturing process can be located at the first peripherally-located regions of a material layer.

As an aside, it is noted that the square-shaped aspect at FIG. 10 can be an aperture 1016 extending through one or more layers of the sample support 640, 642.

The one or more non-uniformities can result from various processes. For example, in one or more embodiments, the non-uniformities 1010 can result from one or more manufacturing processes illustrated at FIG. 8, and further described below. Additionally, and/or alternatively, in one or more embodiments, at least one non-uniformity 1010 can be purposely marked onto a surface of a material layer of a sample support 640, 642.

The one or more non-uniformities 1010 can be disposed at one or more different layers of a sample support 640, 642. Likewise, these one or more non-uniformities can be disposed within a sample support 640, 642 and/or at an external surface of the sample support 640, 642. For example, in one or more embodiments, one or more non-uniformities 1010 can be located at a silicon nitride film layer 814 and/or at a silicon substrate layer 812 (also herein referred to as a silicon frame layer 812) of a sample support 640/642. For example, these non-uniformities 1010 can result from an etching process and/or from any other manufacturing process. In one particular example, one or more non-uniformities 1010 can result at the silicon frame layer 812, such as being a result of an etching process of the initial manufacturing process 802.

In one or more embodiments, one or more non-uniformities 1010 can be visible through one or more overlaying layers (e.g., a silicon nitride film layer 814 and/or a first additional layer 816) overlaying one or more other layers (e.g., the silicon frame layer 812 and/or the silicon nitride film layer 814, such as to allow for the capturing of the one or more non-uniformities in an image 650, 652.

Additionally, and/or alternatively, one or more non-uniformities 1010 can be disposed on an outer cylindrical surface S (FIG. 8) of the substrate layer 812.

In one or more embodiments one or more non-uniformities 1010 can be purposely marked at one or more surfaces, such as at a second central region 1014.

Accordingly, it is appreciated that the imaging component 610 can capture an image of one or more different surfaces and/or layers of a sample support 640, 642 having the one or more different non-uniformities. Likewise, it is appreciated that the profiling component 611 can generate a non-uniformity profile 651, 653 relative to any one or more different surfaces and/or layers of a sample support 640, 642.

In connection therewith, the recording component 612 can generate and/or update a data record (e.g., a data record 644) associated with the sample support for which the non-uniformity profile was generated and/or updated by the profiling component 611. This recording process can comprise tagging, marking and/or otherwise writing data to a respective data record 644, such as via an appropriate write action, to define the respective non-uniformity profile and to identify the respective non-uniformity profile as corresponding to the respective sample support for which the analysis was performed by the profiling component 611.

Additionally, and/or alternatively, the recording component 612 can perform an associated write action for any other secondary parameter which can comprise, but is not limited to, a descriptive aspect and/or dimension of the sample support of interest, for further filling out the associated data record 644, such as provided at metadata of the data record 644.

A data record 644 can be provided in any suitable format (e.g., log, table, matrix, data, metadata, etc.) and can be stored at any suitable location that is communicatively accessible by the sample support recognition system 602 (e.g., at the memory 604, without being limited thereto).

It is noted that in one or more embodiments, any one or more of the processes described above and/or below as being performed by the imaging component 610, profiling component 611, recording component 612 and/or obtaining component 614 can be performed external to the sample support recognition system 602 and/or non-limiting system 600.

Discussion is next directed to FIG. 8 illustrating an exemplary manufacturing process for a sample support. Description of the schematic 800 is provided to define at least a first set of example opportunities where the non-limiting system 600 can be employed. As shown at FIG. 8, a schematic flow diagram 800 illustrates an exemplary process of manufacturing of a sample support including identification of various procedures performed and/or material layers 812-816 added.

During an initial manufacturing phase 802, a base grid 832 (also herein considered as being a sample support 834) can be manufactured, with the base grid 832 comprising a first silicon (Si) substrate layer 812 and a silicon nitride film layer 814 (such as Si₃N₄) applied to the silicon substrate layer 812, such as by etching of the base grid 832. This initial manufacturing phase 802 can be performed at a base grid manufacturer and/or at site corresponding to an administrator of the non-limiting system 600, for example. As used here, "corresponding" can refer at to at a same site as the non-limiting system 600 and/or at a site owned by, used by and/or associated by the administrator.

The base grid 832 can then be sent to a second processing site, such as at a site corresponding to an administrator of the non-limiting system 600. This receipt can provide a first opportunity to profile the sample support (at the time comprising only the base grid 832) for initial identification. For example, the imaging component 610 and profiling component 611 can be employed as described above. A result of use thereof can be generation of a set of known non-uniformity profiles 652 for the set of base grids 832 (also identified as known sample supports 642 because a non-uniformity profile will be known for each of the known sample supports 642, with each of the known sample supports 642 being returned to an appropriately labeled orifice 708 of a sample support container 702). It is appreciated that any mention of a sample support container 702 made herein can alternatively be associated instead with a vacuum-sealed sample support container 704, which also can have a set of orifices 708 being labeled, as shown at FIG. 7.

In connection with receipt of the base grid 832/known sample support 642, a pre-processing phase 804 can comprise an application of a first additional layer 816, such as by a coating process, resulting in a sample support 834.

At the end of each step (e.g., between steps 802-808), to prepare the base grids 832/sample supports 834 and a plurality of other etched and/or otherwise partially processed base grids 832/sample supports 834 for shipment, these base grids 832/sample supports 834 can be inserted into orifices of a sample support container 702. The orifices 708 can be labeled, as shown at FIG. 7, to identify the plurality of base grids 832/sample supports 834. After this process is complete, the base grids 832/sample supports 834 can be returned to the sample support container 702, with the intention being to return the sample supports to their respective labeled orifices 708. However, this does not always occur, and thus provides yet another opportunity for use of the non-limiting system 600 for recognition of the base grids 832/sample supports 834 upon return to the administrating entity of the non-limiting system 600, as will be described below. That is, once the base grids 832/sample supports 834 are removed from the sample support container 702, direct identification is lost, as the base grids 832/sample supports 834 are often not individually labeled. As a result, continued successful identification is based on indirect tracking other than by use of the sample support container 702.

A next processing phase can be performed at a same processing location or at another processing location. The next phase can be a main processing phase 806 which can include one or more processing steps, such as baking. After the one or more processing steps, the sample supports 834 can be returned to the sample support container 702, with the intention being to return the sample supports to their respective labeled orifices 708. Alternatively, the sample supports 834 can be switched to a vacuum-sealable sample support container 704 having a same labeling method for corresponding orifices 708.

A next processing phase can be performed at a same processing location or at another processing location. The next phase can be a post-processing phase 808 which can include one or more post-processing steps, such as cleaning. Again, after post-processing, the sample supports 834 can be returned to the sample support container 702, with the intention being to return the sample supports to their respective labeled orifices 708. Alternatively, the sample supports 834 can be switched to a vacuum-sealable sample support container 704 having a same labeling method for corresponding orifices 708.

In view of the above, it will be recognized that one or more base grids 832/sample supports 834 can have been mis-slotted in a wrong orifice 708 of a same or different sample container 702/704, lost, and/or otherwise damaged during any one or more of the above-described processing phases 802-808. Indeed, as indicated above, once the base grids 832/sample supports 834 are removed from an initial sample support container 702, direct identification can be lost, as the base grids 832/sample supports 834 are often not individually labeled. As a result, continued successful identification was based on indirect tracking other than by use of the sample support container 702, which indirect tracking is often subjective and error-prone.

Accordingly, upon receipt at the administrating entity or other location having access to the sample support recognition system 600, the plurality of base grids832/sample supports 834 in the vacuum-sealed sample support container 704 can be identified as unknown sample supports 640. It is thus desired that these unknown sample supports 640 each be recognized as one of the previously profiled known sample supports 642.

As described above, one or more processes can be performed by the imaging component 610 and/or profiling component 611 to generate respective data records 644 defining the unknown sample supports 640. In addition to the processes described above, the data records 644 can comprise an indication of the orifice 708 at which each sample support 640 was located upon receipt after post-processing. This step can apply to any use of the non-limiting system 600. That is, the orifice label can provide yet another piece of evidence (e.g., an alternative parameter) which can be used by the matching component 618 to generate a match 656, as will be described below.

To ultimately generate a match 656 of an unknown sample support 640 to a known sample support 642, the images 650, 652 can be retrieved, received, sent and/or otherwise obtained by the obtaining component 614 for use by one or more other components of the sample support recognition system 602.

Using the one or more images 650 of an unknown sample support 640 of interest (e.g., an unknown sample support for which recognition is desired and/or directed) and one or more images 652 of one or more known sample supports 642, the comparing component 616 can generally output and/or otherwise generate a comparison score 654 corresponding to the unknown sample support 640, and thus corresponding to at least one image 650 of the unknown sample support 640.

For example, the comparing component 616 can compare an unknown image 650 of the unknown sample support 640 with a known image 652 of the known sample support 642. That is, based on the images 650, 652, the comparing component 616 can compare an unknown non-uniformity profile 651 associated with the unknown sample support 640 of interest with at least one known non-uniformity profile 613 associated with a known sample support.

This comparing can be a result of and/or employ contrast in the one or more images 650, 652, which can cause varying luminosities or darknesses of different aspects of the one or more images 650, 652. For example, in one or more embodiments, the one or more non-uniformities 1010 can have a lesser luminosity and the central region 1014 can have a greater luminosity. In one or more other embodiments, the one or more non-uniformities 1010 can have a greater luminosity and the central region 1014 can have a lesser luminosity. In one or more embodiments, the one or more non-uniformities 1010 can have varying luminosities. It is noted that the non-uniformities 1010 are illustrated as being darker and having a lesser luminosity merely as but one example for ease of viewing. Indeed, in use, the opposite contrast can result from a dark field microscope imaging performed and/or directed by the imaging component 610 (e.g., where the one or more non-uniformities 1010 have a greater luminosity than the surround central region 1014 that surrounds and bounds the one or more non-uniformities 1010.

For example, a comparing can comprise identification of one or more sections and use of subsequent analysis for all sections as a whole and/or for one or more sections at a time and/or at least partially in parallel with one another. After selection of a first section of one of the images 650, 652, the comparing component 616, employing image recognition techniques, can search for an area of the other of the images 650, 652 that is most similar. In one or more embodiments, based on identification of an area of the other of the images 650, 652, sectioning of the other of the images 650, 652 can be applied. In one or more other embodiments, sectioning can have been already applied to the other of the images 650, 652. In one or more other embodiments, sectioning can have been already applied to the other of the images 650, 652 but can be revised based upon the identification of the area of the other of the images 650, 652.

In some examples, methods for detection of non-uniformities can include descriptor matching, detectors, and/or keypoint descriptors such as Harris, Scale Invariant Feature Transform (SIFT), Speeded-Up Robust Features (SURF), eigenvalues, Binary Robust Independent Elementary Features (BRIEF), Binary Robust Invariant Scalable Keypoints (BRISK), Features from Accelerated Segment Test (FAST), Oriented FAST and Rotated BRIEF (ORB), Fast Library for Approximate Nearest Neighbors (FLANN), or Fast Retina Keypoints (FREAK). Once non-uniformities have been identified in an image, feature matching can be applied across images to obtain relationships (i.e., relationships indicated by identification lines 1112 described below). In one or more examples, matched non-uniformities or associated image pixels can be transformed to determine XYZ coordinates. From these coordinates, 3-D displacements can be calculated as the Euclidean distance between XYZ values in one image and XYZ values in a separate image (such as a record image, captured image, and/or comparison image).

In another example, the comparing component 616 can analyze a first of the images 650, 652 based on pixelation of the image, such as analyzing a group of one or more pixels at a time and matching such group to a most similar group of one or more pixels of the other of the images 650, 652.

In one or more embodiments, such pixel-based search can be employed for an entirety of an image or for less than all of an image, such as only for all or a portion of pixels comprising a non-uniformity 1010 (e.g., comprising a pixel having a determined greater or lesser luminosity and/or contrast).

In another example, the comparing component 616 can identify a first non-uniformity 1010 of a first of the images 650, 652 based on the variation in contrast between a boundary or region 1014 bounding the non-uniformity 1010 having a different contrast than the boundary or region 1014. Accordingly, analysis of the first of the images 650, 652 can proceed to analyze all or a portion of non-uniformities 1010 of the sample support in the first of the images 650, 652. It is appreciated that in one or more embodiments, the non-uniformity profile 651, 653 employed can have one or more non-uniformities 1010 pre-defined and/or pre-recognized. As such, the recognition of such one or more non-uniformities 1010 can additionally, and/or alternatively, be performed by the profiling component 611.

It is appreciated that any one or more of the techniques described above, and/or a similar technique for image recognition known to those having ordinary skill in the art, can be employed by the comparing component 616.

For example, to provide illustration to the above, attention is directed to FIG. 11. Looking to FIG. 11, illustrated are various illustrations of stages of comparison that can be executed by the comparing component 616, such as employing one or more image recognition techniques.

For example, unknown and known images can first be obtained from the obtaining component 614. A first captured image 1102 is an unknown image 650 of an unknown sample support A (640). A second recorded image 1104 is a known image 652 of a known sample support X (642).

Next, comparison image 1106 illustrates a process of comparison based on a pixel-based or non-uniformity-based approach. As shown at comparison image 1106, a first unknown sample support B has been compared to a first known sample support Y. Also, a second unknown sample support C has been compared to a second known sample support Z. Identification lines 1112 signify matching of an aspect of a first image (e.g., a non-uniformity and/or group of one or more pixels) with an aspect of a second image (e.g., a non-uniformity and/or group of one or more pixels).

It will be appreciated that one or more of the captured image 1102, record image 1104 and/or comparison image 1106, and/or a similar image comprising the identification lines 1112 can be displayed to a user entity of the non-limiting system 600, such as being displayed at the display device 410 of a computing device 400 associated with the user entity.

Based on the comparing, the comparing component 616 can generate a comparison score 654 providing a value to define a level of similarity between the pair of compared images (e.g., between the pair of compared sample supports).

Additionally, and/or alternatively, the comparing component 616 can generate a parameter score 1202 providing a value to define a level of similarity between a parameter of the pair of compared images (e.g., between the pair of compared sample supports) based on other than the comparing executed by the comparing component 616. For example, the comparing component 616 can compare any other parameter (e.g., such as material composition, dimensions, surface angles, mass and/or the like) that can be obtained from the respective non-uniformity profiles 651, 653 corresponding to the pair of sample supports being compared.

Additionally, and/or alternatively, the comparing component 616 can generate an aggregated score 1204 providing an aggregated value to define a level of similarity between a parameter of the pair of compared images (e.g., between the pair of compared sample supports) based on other than the comparing executed by the comparing component 616. The aggregated value can be based on an aggregation, such as summation, of a comparison score 654 and at least one parameter score 1202.

It will be appreciated that more than one unknown image 650 of the unknown sample support 640 and/or more than one known image 652 of a known sample support 642 can be employed by the comparing component 616. As such, a pair of compared images (e.g., and thus a pair of compared sample supports) can have more than one comparison score 654, parameter score 1202 and/or aggregated score 1204 associated therewith.

It will further be appreciated that more than one known sample support 642, having associated therewith one or more known images 652, can be employed by the comparing component 616. As such, an unknown image 650 (e.g., and thus an unknown sample support 640) can have associated therewith a first group of one or more scores based on comparison to a first known image 652 of a first known sample support 642 and additional groups of one or more scores based on comparison to additional known images 652 of other known sample supports 642.

Based on the above one or more processes that can be performed by the comparing component 616, the matching component 618 can generally match the unknown sample support 650 to a known sample support 652 based on the aforementioned non-uniformity profiles 651, 653, and more particularly based on one or more of the aforementioned scores (e.g., comparison score, parameter score and/or aggregated score) which are based on the aforementioned non-uniformity profiles 651, 653.

For example, in one or more embodiments, the matching component 618 can match an unknown sample support 642 of interest to a selected known sample support 640 based on a comparison score 654, parameter score 1202 and/or aggregated score 1204 associated with the known sample support 640 comprising a highest value as compared to one or more other comparison scores 654, parameter scores 1202 and/or aggregated scores 1204 associated with one or more other known sample supports 640.

That is, looking to FIG. 12, a known sample support X can have associated therewith a comparison score I comprising a highest value as compared to other comparison scores II and III. As a result of this score comparison, a match 656 can be output by the matching component 618 relating the unknown sample support 640 to the known sample support 642.

In one or more embodiments, one or more of a comparison score 654, parameter score 1202 and/or aggregated score 1204 associated with a same known sample support 642 can be employed to determine a match 656 by the matching component 618. For example, a deviation between first highest and second highest scores (e.g., one or more of the comparison score 654, parameter score 1202 and/or aggregated score 1204) can be determined by the matching component 618, such as in a case where a first known sample support 642 can have associated therewith a highest comparison score 654 but a second known sample support 642 can have associated therewith a highest aggregated score 1204. As such, a first deviation between the first and second highest comparison scores 654 can be greater than a second deviation between the first and second highest aggregated scores 1204, and thus the first known sample support 642 (associated with the highest comparison score 654) can be matched to the unknown sample support 640 via the match 656.

In one or more embodiments, the matching component 618 can compare a comparison score 654 to a comparison score threshold 1216, a parameter score 1202 to a parameter score threshold 1212, and/or an aggregated score 1204 to an aggregated score threshold 1214. For example, as a result of one or more of the score comparisons discussed above, a probable match 1210 instead can be output by the matching component 618. The score (e.g., of the comparison score 654, parameter score 1202 and/or aggregated score 1204) employed for the probable match 1210 can be compared to a respective threshold (e.g., the respective comparison threshold 1216, parameter threshold 1212 and/or aggregated threshold 1214).

Where the probable match 1210 is generated that satisfies the respective threshold, the probable match 1210 can be identified as a match 656 and output by the matching component 618 from the non-limiting system 600, such as to the display device 410 of the device 400.

In one or more embodiments, where no match is generated that satisfies a respective one or more thresholds being employed, the matching component 618 can provide one or more suggestions and/or take one or more actions. The one or more suggestions can comprise suggesting capturing new images, altering a lighting for a capture, altering an orientation of a sample support for the capture, altering a contrast of a captured image, and/or use of a manual review by the user entity or other entity. The one or more actions can comprise issuance of one or more suggestions (e.g., to the display device 410 of the device 400), and/or directing the imaging component 610 to capture another image automatically, such as where the sample support remains at the imaging platform 904.

Furthermore, discussion now turns to one or more processes that can be performed by the matching component 618 relative to requested recognition of a set of two or more unknown sample supports 640. For example, when it is desired to perform recognition for more than one unknown sample support 640 that are known to correspond to a group of more than one known sample supports 642, the matching component 618 can perform one or more further processes. As but one non-limiting example, based on the generation of a first match 656 relative to a first unknown sample support 640, a second match 656 relative to a second unknown sample support 640 can be generated. That is, in one or more cases, the second unknown sample support 640 can have associated therewith a temporary match 1210 for two or more known sample supports 642, but no final match 656. By process of elimination, a generation of the first match 656 can allow for removal of one of the temporary matches 1210 and generation of a second match 656 for the second unknown sample support 642.

It is noted that this process using one or more temporary matches 1210 and/or final matches 656 to determine one or more other temporary matches 1210 and/or final matches 656 can be performed where suitable using varying comparisons and/or elimination processes.

Upon a match 656 being generated and/or otherwise identified by the matching component 618, the updating component 620 can update a respective data record 644 associated with one of the unknown sample support 640 or known sample support 642 corresponding to the match 656. This updating can comprise tagging, marking and/or otherwise writing data to the respective data record 644, such as via an appropriate write action, to identify the unknown sample support 640 and known sample support 642 as being recognized as being the same. The updating additionally and/or alternatively can comprise data and/or metadata corresponding to any one or more of a respective comparison score, parameter score, aggregated score and/or threshold comparison.

Also, in connection with generation of the match 656 by the matching component 618, whether separately from or at least partially in parallel with the updating, the notifying component 622 can generally generate a notification 658 defining that the match 656 was generated. This notification 658 can comprise any suitable type of data, metadata, image, audio, text and/or the like and can be issued, sent and/or otherwise made available to a device associated with an administrating entity for the non-limiting system 600, for example.

It will be appreciated that in one or more embodiments any one or more of the processes discussed above as being performed by the non-limiting system 600 can be performed automatically in succession.

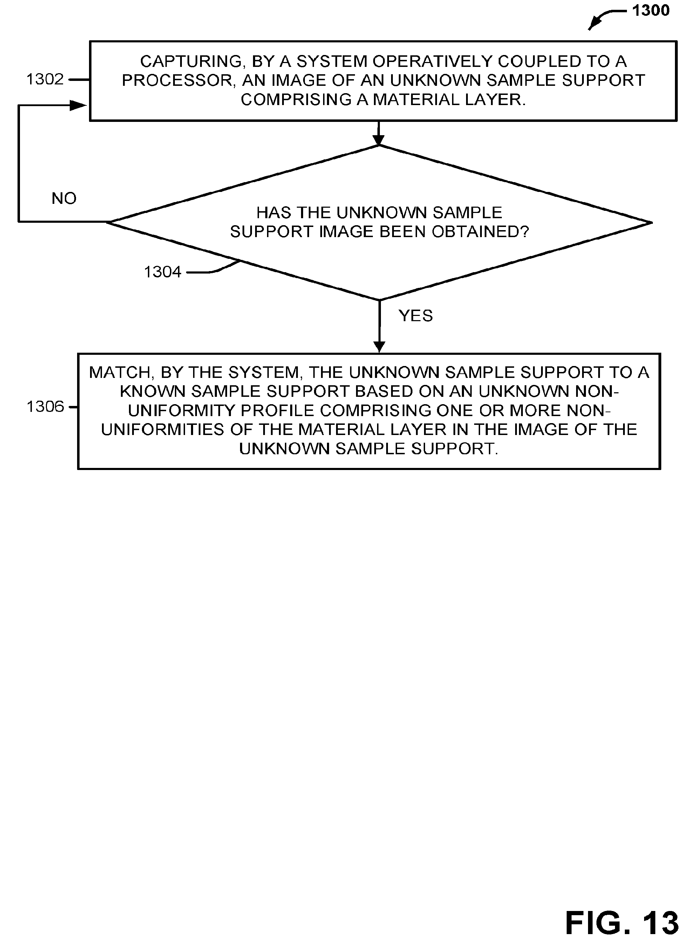

As a summary of the above-described components and functions thereof, referring next to FIG. 13, illustrated is a flow diagram of an example, non-limiting method 1300 that can facilitate a process for recognition of a sample support, in accordance with one or more embodiments described herein, such as the non-limiting system 600 of FIG. 6. While the non-limiting method 1300 is described relative to the non-limiting system 600 of FIG. 6, the non-limiting method 1300 can be applicable also to other systems described herein, such as the non-limiting system 500 of FIG. 5. Repetitive description of like elements and/or processes employed in respective embodiments is omitted for sake of brevity.

At 1302, the non-limiting method 1300 can comprise capturing, by a system operatively coupled to a processor (e.g., imaging component 610 coupled to processor 506), an image (e.g., image of unknown sample support grid 650) of an unknown sample support (e.g., unknown sample support grid 640) comprising a material layer (e.g., material layers 812-816).

At 1304, the non-limiting method 1300 can comprise determining, by the system (e.g., matching component 618), whether the unknown sample support image is obtained. If yes, the non-limiting method 1300 can proceed to step 1306. If no, the non-limiting method can proceed back to step 1302 to obtain one or more additional images.

At 1306, the non-limiting method 1300 can comprise matching, by the system (e.g., matching component 618), the unknown sample support to a known sample support based on an unknown non-uniformity profile (e.g., unknown non-uniformity profile 651) comprising one or more non-uniformities (e.g., non-uniformities 1010) of the material layer in the image of the unknown sample support.

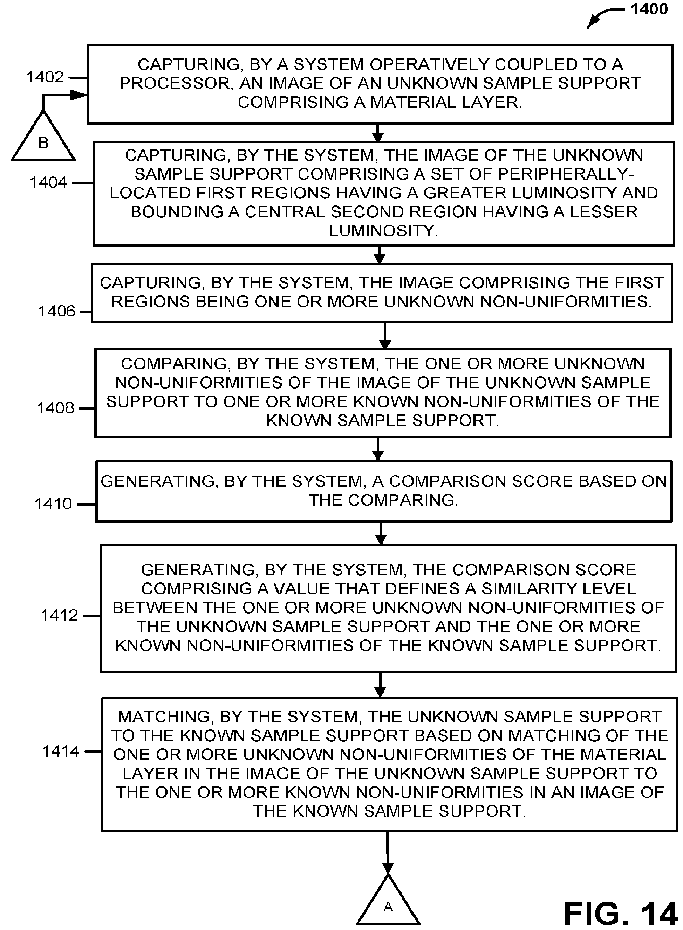

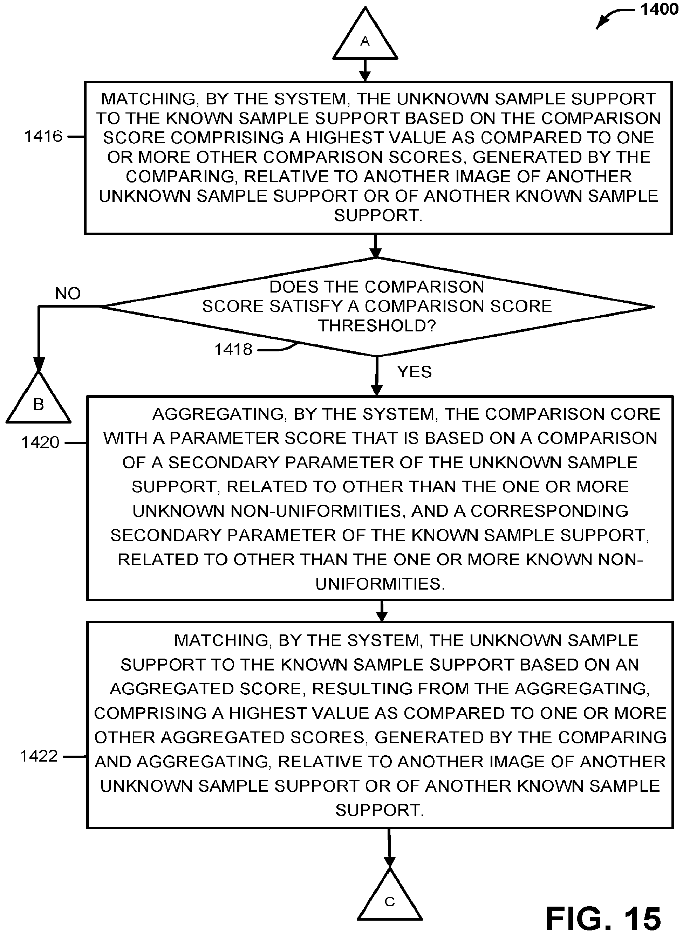

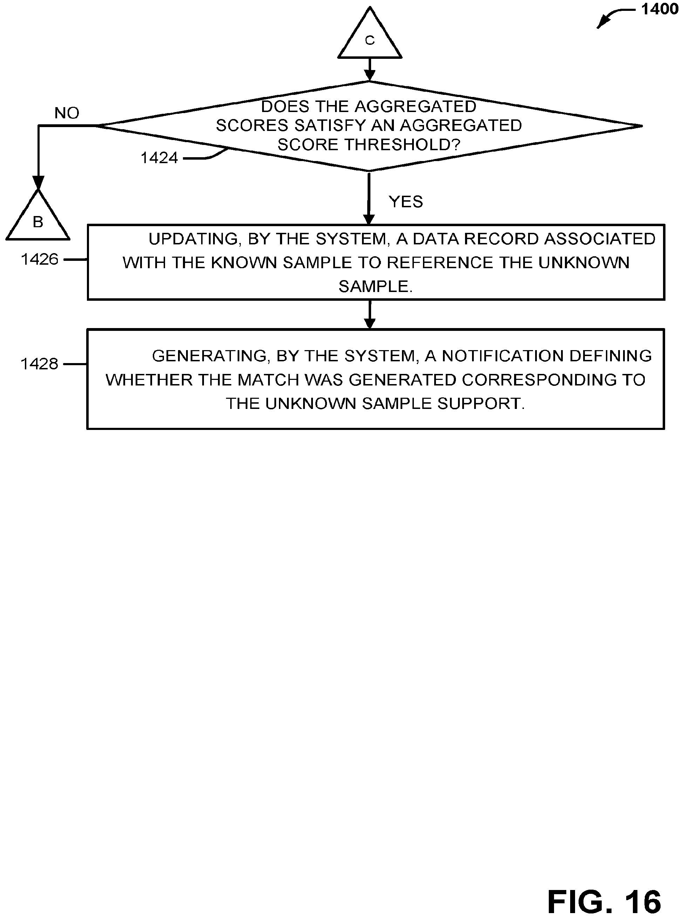

As another summary of the above-described components and functions thereof, referring next to FIGS. 14 to 16, illustrated is a flow diagram of an example, non-limiting method 1400 that can facilitate a process for recognition of a sample support, in accordance with one or more embodiments described herein, such as the non-limiting system 600 of FIG. 6. While the non-limiting method 1400 is described relative to the non-limiting system 600 of FIG. 6, the non-limiting method 1200 can be applicable also to other systems described herein, such as the non-limiting system 500 of FIG. 5. Repetitive description of like elements and/or processes employed in respective embodiments is omitted for sake of brevity.

At 1402, the non-limiting method 1400 can comprise capturing, by a system operatively coupled to a processor (e.g., imaging component 610 coupled to processor 506), an image (e.g., image of unknown sample support grid 650) of an unknown sample support (e.g., unknown sample support grid 640) comprising a material layer (e.g., material layers 812-816).

At 1404, the non-limiting method 1400 can comprise capturing, by the system (e.g., imaging component 610), the image of the unknown sample support comprising a set of peripherally-located first regions having a greater luminosity and bounding a central second region having a lesser luminosity.

At 1406, the non-limiting method 1400 can comprise capturing, by the system, the image comprising the first regions being one or more unknown non-uniformities (e.g., non-uniformities 1010).

At 1408, the non-limiting method 1400 can comprise comparing, by the system, the one or more unknown non-uniformities of the image of the unknown sample support to one or more known non-uniformities (e.g., known non-uniformities 1110) of the known sample support.

At 1410, the non-limiting method 1400 can comprise generating, by the system (e.g., comparing component 616), a comparison score (e.g., comparison score 654) based on the comparing.

At 1412, the non-limiting method 1400 can comprise generating, by the system (e.g., comparing component 616), the comparison score comprising a value that defines a similarity level between the one or more unknown non-uniformities of the unknown sample support and the one or more known non-uniformities of the known sample support.

At 1414, the non-limiting method 1400 can comprise matching, by the system (e.g., matching component 618), the unknown sample support to the known sample support based on matching of the one or more unknown non-uniformities of the material layer in the image of the unknown sample support to the one or more known non-uniformities in an image (e.g., image of known sample support grid 652) of the known sample support.

At 1416, the non-limiting method 1400 can comprise matching, by the system (e.g., matching component 618), the unknown sample support to the known sample support based on the comparison score comprising a highest value as compared to one or more other comparison scores, generated by the comparing, relative to another image of another unknown sample support or of another known sample support.

At 1418, the non-limiting method 1400 can comprise determining, by the system (e.g., matching component 618), whether the comparison score satisfies a comparison score threshold (e.g., comparison threshold 1216). If no, the non-limiting method 1400 can proceed back to step 1402 to capture one or more additional images of the unknown sample support. If yes, the non-limiting method can proceed to step 1420.

At 1420, the non-limiting method 1400 can comprise aggregating, by the system (e.g., matching component 618), the comparison core with a parameter score (e.g., parameter score 1202) that is based on a comparison of a secondary parameter of the unknown sample support, related to other than the one or more unknown non-uniformities, and a corresponding secondary parameter of the known sample support, related to other than the one or more known non-uniformities.

At 1422, the non-limiting method 1400 can comprise matching, by the system (e.g., matching component 618), the unknown sample support to the known sample support based on an aggregated score, resulting from the aggregating, comprising a highest value as compared to one or more other aggregated scores, generated by the comparing and aggregating, relative to another image of another unknown sample support or of another known sample support.

At 1424, the non-limiting method 1400 can comprise determining, by the system (e.g., matching component 618), whether the aggregated score satisfies a comparison score threshold. If no, the non-limiting method 1400 can proceed back to step 1402 to capture one or more additional images of the unknown sample support. If yes, the non-limiting method can proceed to step 1426.

At 1426, the non-limiting method 1400 can comprise updating, by the system (e.g., updating component 620), a data record (e.g., data record 644) associated with the known sample to reference the unknown sample.

At 1428, the non-limiting method 1400 can comprise generating, by the system (e.g., notifying component 622), a notification (e.g., notification 658) defining whether the match was generated corresponding to the unknown sample support.

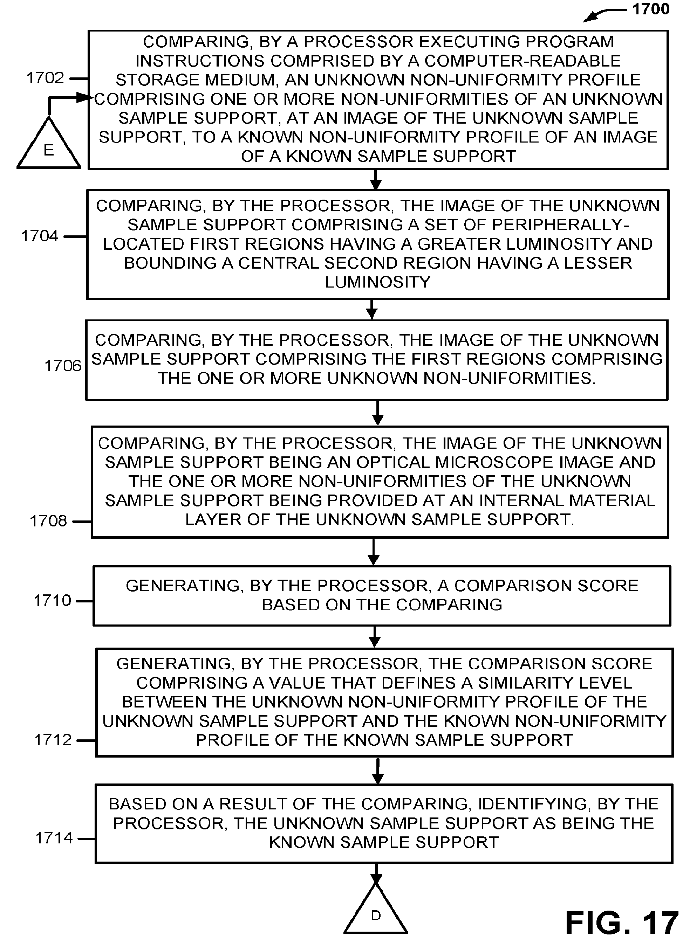

As another summary of the above-described components and functions thereof, referring next to FIGS. 17 and 18, illustrated is a flow diagram of another example, non-limiting method 17 that can facilitate a process for recognition of a sample support, in accordance with one or more embodiments described herein, such as the non-limiting system 600 of FIG. 6. While the non-limiting method 1700 is described relative to the non-limiting system 600 of FIG. 6, the non-limiting method 1700 can be applicable also to other systems described herein, such as the non-limiting system 500 of FIG. 5. Repetitive description of like elements and/or processes employed in respective embodiments is omitted for sake of brevity.

At 1702, the non-limiting method 1700 can comprise comparing, by a processor executing program instructions comprised by a computer-readable storage medium, an unknown non-uniformity profile (e.g., unknown non-uniformity profile 651) comprising one or more non-uniformities (e.g., non-uniformities 1010) of an unknown sample support (e.g., unknown sample support grid 640), at an image of the unknown sample support (e.g., image of unknown sample support grid 650), to a known non-uniformity profile (e.g., known non-uniformity profile 653) of an image of a known sample support (e.g., image 652 of known sample support grid 642).

At 1704, the non-limiting method 1700 can comprise comparing, by the processor, the image of the unknown sample support comprising a set of peripherally-located first regions having a greater luminosity and bounding a central second region having a lesser luminosity.

At 1706, the non-limiting method 1700 can comprise comparing, by the processor, the image of the unknown sample support comprising the first regions comprising the one or more unknown non-uniformities.

At 1708, the non-limiting method 1700 can comprise comparing, by the processor, the image of the unknown sample support being an optical microscope image and the one or more non-uniformities of the unknown sample support being provided at an internal material layer of the unknown sample support.

At 1710, the non-limiting method 1700 can comprise generating, by the processor, a comparison score (e.g., comparison score 654) based on the comparing.

At 1712, the non-limiting method 1700 can comprise generating, by the processor, the comparison score comprising a value that defines a similarity level between the unknown non-uniformity profile of the unknown sample support and the known non-uniformity profile of the known sample support.

At 1714, the non-limiting method 1700 can comprise based on a result of the comparing, identifying, by the processor, the unknown sample support as being the known sample support.

At 1716, the non-limiting method 1700 can comprise identifying, by the processor, the unknown sample support to the known sample support based on the comparison score comprising a highest value as compared to one or more other comparison scores, generated by the comparing, relative to another image of another unknown sample support or of another known sample support.

At 1718, the non-limiting method 1700 can comprise determining, by the processor, whether the comparison score satisfies a comparison score threshold (e.g., comparison threshold 1216). If no, the non-limiting method 1400 can proceed back to step 1702 to capture one or more additional images of the unknown sample support. If yes, the non-limiting method can proceed to step 1720.

At 1720, the non-limiting method 1700 can comprise determining, by the processor, a match of a second unknown sample support to a second known sample support based on the result of the comparing.

### Additional Summary

For simplicity of explanation, the computer-implemented and non-computer-implemented methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the computer-implemented and non-computer-implemented methodologies in accordance with the described subject matter. In addition, the computer-implemented and non-computer-implemented methodologies could alternatively be represented as a series of interrelated states via a state diagram or events. Additionally, the computer-implemented methodologies described hereinafter and throughout this specification are capable of being stored on an article of manufacture for transporting and transferring the computer-implemented methodologies to computers. The term article of manufacture, as used herein, is intended to encompass a computer program accessible from any computer-readable device or storage media.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

In summary, one or more systems, computer program products and/or computer-implemented methods provided herein relate to a process for recognition of a sample support. A system can comprise a memory that stores, and a processor that executes, computer executable components. The computer executable components can comprise an imaging component that captures an image of an unknown sample support comprising a material layer; and a matching component that matches the unknown sample support to a known sample support based on an unknown non-uniformity profile comprising one or more non-uniformities of the material layer in the image of the unknown sample support.

The one or more embodiments disclosed herein can achieve improved sample support grid recognition as compared to conventional techniques employing mere labeling and guesswork, for example. Rather, the one or more embodiments described herein can provide improved performance of imaging systems by providing an approved and recognized baseline for imaging via a verified sample support grid. That is, such systems can employ known dimensions and/or other measurements of a sample support grid to which a sample of interest can be attached. Verification that a sample support grid being used is indeed the sample support grid corresponding to such dimensions and/or measurements can reduce imaging and/or measurement errors down the line during analysis of the respective sample of interest.

In connection with the above, the one or more embodiments described herein can provide verifiable tracking of one or more, such as a plurality, of sample support grids across various stages of manufacturing, processing and/or preparing of the sample support grids at different locations and/or by different entities. That is, physical properties of the sample support grids themselves can be employed for identification of sample support grids, providing for recognition of one or more sample support grids of interest as being the proper sample support grid (e.g., those that are specified for use) relative to one or more imaging systems.

For example, based on specified application of a light source to the sample support grids, both initially, and during one or more subsequent identifications, one or more non-uniformities of one or more materials of the sample support grids can be employed to track (e.g., as a fingerprint or other profile) identification of the sample support grids. This can allow for more efficient and more accurate identification of the sample supports and/or verified recognition that a specified sample support grid is indeed being employed, as compared to existing techniques. In turn, this can allow for more accurate placement of a sample, such as a lamella, on and/or at the sample support, as compared to existing techniques.

The identification of a selected unknown sample support grid can be made increasingly efficient through use of a matching process employing one or more non-uniformities of a material of the selected unknown sample support grid as compared to one or more non-uniformities of an image of a known sample support grid. In one or more embodiments, a comparison score generated relative to this comparison can be aggregated with one or more parameter scores corresponding to comparison of one or more secondary parameters of the selected unknown sample support grid to one or more corresponding secondary parameters of the known sample support grid.

Indeed, in view of the one or more embodiments described herein, a practical application of the one or more systems, computer-implemented methods and/or computer program products described herein can be ability to automatically match an image of an unknown sample support to an image of a known sample support, thereby providing a match of a known sample support to at least a record defining a known sample support. This recognition can be performed for the purposes of verifying one or more properties of a sample support to be used and/or being used relative to a material analysis imaging system, such as an S/TEM or FIB device. This recognition also can be performed efficiently and accurately without manual input to a decision-making process, thus reducing time, effort, manual input and/or one or more errors resulting from conventional frameworks for sample support recognition.

Further due to the accurate non-uniformity identification that can be performed by the one or more embodiments described herein, a sample support can be located more precisely relative to an imaging column or other aspect of such imaging system, and/or a sample of interest can be attached in a more precise attachment to an attachment region of the sample support.

Furthermore, one or more embodiments described herein can be employed in a real-world system based on the disclosed teachings. For example, as noted above, the accurate locating of a sample support being imaged, such as due to the recognition of the sample support by a framework discussed herein, can directly result in more accurate identification of an attachment region of a sample support and/or more accurate physical placement of a physical sample at the sample support comprising the attachment region, as compared to existing techniques. This real-world result can be made possible due to the processes of the one or more embodiments described herein related to profiling of one or more unknown non-uniformities of an unknown sample support, comparison of a resulting unknown non-uniformity profile to a known non-uniformity profile of a known sample, and subsequent matching of an image of the unknown sample support to an image of the known sample support based on the comparison. That is, the one or more embodiments described herein can provide for high accuracy in computer-aided recognition of the unknown sample support. The embodiments disclosed herein thus can provide improvements to scientific instrument technology (e.g., improvements in the computer technology supporting such scientific instruments, among other improvements).

The embodiments herein can provide scaled recognition of two or more sample supports and/or two or more sample support images at least partially in parallel with one another. For example, a set of processes relative to requested recognition can be performed at least partially in parallel to a set of processes relative to another requested recognition, or even at least partially in parallel to a set of processes relative to a same requested recognition (e.g., such as where two or more unknown sample support images for a same unknown sample support are being analyzed at least partially in a parallel with one another). As an example of the latter, one image can have a first darkness level and a second image can have a second darkness level, as discussed above.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

One or more embodiments described herein can be, in one or more embodiments, inherently and/or inextricably tied to computer technology and cannot be implemented outside of a computing environment. For example, one or more processes performed by one or more embodiments described herein can more efficiently, and even more feasibly, provide program and/or program instruction execution, such as relative to automatic sample support recognition as compared to existing systems and/or techniques using manual approaches and/or computer-aided approaches. Systems, computer-implemented methods and/or computer program products providing performance of these processes are of great utility in the fields of material analysis, such as in material analysis using a dual beam system and cannot be equally practicably implemented in a sensible way outside of a computing environment.

One or more embodiments described herein can employ hardware and/or software to solve problems that are highly technical, that are not abstract, and that cannot be performed as a set of mental acts by a human. For example, a human, or even thousands of humans, cannot efficiently, accurately and/or effectively automatically identify a non-uniformity profile of a sample support grid, particularly a sample support grid having a circumference in a range of about 5mm to about 2mm, such as about 3mm, as the one or more embodiments described herein can provide this process. That is, regardless of use of a microscope and manual viewing approaches, a human cannot digitize viewed results and compare such results against computer data, as performed by the one or more embodiments described herein, as a set of mental acts and/or with pen and paper.

In one or more embodiments, one or more of the processes described herein can be performed by one or more specialized computers (e.g., a specialized processing unit, a specialized classical computer, a specialized quantum computer, a specialized hybrid classical/quantum system and/or another type of specialized computer) to execute defined tasks related to the one or more technologies describe above. One or more embodiments described herein and/or components thereof can be employed to solve new problems that arise through advancements in technologies mentioned above, employment of quantum computing systems, cloud computing systems, computer architecture and/or another technology.

One or more embodiments described herein can be fully operational towards performing one or more other functions (e.g., fully powered on, fully executed and/or another function) while also performing one or more of the one or more operations described herein.

To provide additional summary, a listing of embodiments and features thereof is next provided.

A system, comprising: a memory that stores computer executable components; and a processor that executes the computer executable components stored in the memory, wherein the computer executable components comprise: an imaging component that captures an image of an unknown sample support comprising a material layer; and a matching component that matches the unknown sample support to a known sample support based on an unknown non-uniformity profile comprising one or more non-uniformities of the material layer in the image of the unknown sample support.

The system of the preceding paragraph, further comprising: a comparing component that compares the unknown non-uniformity profile of the image of the unknown sample support to a known non-uniformity profile of an image of the known sample support and generates a comparison score based on the comparing, wherein the comparison score comprises a value that defines a similarity level between the unknown non-uniformity profile of the unknown sample support and the known non-uniformity profile of the known sample support.

The system of any preceding paragraph, further comprising: wherein the matching component further matches the unknown sample support to the known sample support based on the comparison score comprising a highest value as compared to one or more other comparison scores generated by the comparing component relative to another image of another unknown sample support or of another known sample support.

The system of any preceding paragraph, wherein the image of the unknown sample support comprises a set of peripherally-located first regions having a greater luminosity and bounding a central second region having a lesser luminosity, and wherein the first regions define the unknown non-uniformity profile.

The system of any preceding paragraph, wherein the image of the unknown sample support is an optical microscope image, and the material layer comprises a silicon frame.

The system of any preceding paragraph, further comprising: an obtaining component that obtains a set of images of known sample supports, including the image of the known sample support.

The system of any preceding paragraph, further comprising: a notifying component that generates a notification defining whether the match was generated corresponding to the unknown sample support.

A computer-implemented method, comprising: capturing, by a system operatively coupled to a processor, an image of an unknown sample support comprising a material layer; and matching, by the system, the unknown sample support to a known sample support based on matching of one or more unknown non-uniformities of the material layer in the image of the unknown sample support to one or more known non-uniformities in an image of the known sample support.

The computer-implemented method of the preceding paragraph, further comprising: comparing, by the system, the one or more unknown non-uniformities of the image of the unknown sample support to the one or more known non-uniformities of the known sample support; and generating, by the system, a comparison score based on the comparing, wherein the comparison score comprises a value that defines a similarity level between the one or more unknown non-uniformities of the unknown sample support and the one or more known non-uniformities of the known sample support.

The computer-implemented method of any preceding paragraph, wherein the matching further comprises matching, by the system, the unknown sample support to the known sample support based on the comparison score comprising a highest value as compared to one or more other comparison scores, generated by the comparing, relative to another image of another unknown sample support or of another known sample support.

The computer-implemented method of any preceding paragraph, wherein the matching further comprises: aggregating, by the system, the comparison core with a parameter score that is based on a comparison of a secondary parameter of the unknown sample support, related to other than the one or more unknown non-uniformities, and a corresponding secondary parameter of the known sample support, related to other than the one or more known non-uniformities, and matching, by the system, the unknown sample support to the known sample support based on an aggregated score, resulting from the aggregating, comprising a highest value as compared to one or more other aggregated scores, generated by the comparing and aggregating, relative to another image of another unknown sample support or of another known sample support.

The computer-implemented method of any preceding paragraph, wherein the image of the unknown sample support comprises a set of peripherally-located first regions having a greater luminosity and bounding a central second region having a lesser luminosity, and wherein the first regions are the one or more unknown non-uniformities.

The computer-implemented method of any preceding paragraph, further comprising: updating, by the system, a data record associated with the known sample to reference the unknown sample.

The computer-implemented method of any preceding paragraph, further comprising: generating, by the system, a notification defining whether the match was generated corresponding to the unknown sample support.

A computer program product facilitating a process for sample support recognition, the computer program product comprising a computer readable storage medium having program instructions embodied therewith, and the program instructions executable by a processor to cause the processor to: compare, by the processor, an unknown non-uniformity profile comprising one or more non-uniformities of an unknown sample support, at an image of the unknown sample support, to a known non-uniformity profile of an image of a known sample support; and based on a result of the comparing, identify, by the processor, the unknown sample support as being the known sample support.

The computer program product of the preceding paragraph, wherein the program instructions are further executable by the processor to cause the processor to: generate, by the processor, a comparison score based on the comparing, wherein the comparison score comprises a value that defines a similarity level between the unknown non-uniformity profile of the unknown sample support and the known non-uniformity profile of the known sample support.

The computer program product of any preceding paragraph, wherein the program instructions are executable by the processor to further cause the processor to: match, by the processor, the unknown sample support to the known sample support based on the comparison score comprising a highest value as compared to one or more other comparison scores, generated by the comparing, relative to another image of another unknown sample support or of another known sample support.

The computer program product of any preceding paragraph, wherein the image of the unknown sample support comprises a set of peripherally-located first regions having a greater luminosity and bounding a central second region having a lesser luminosity, and wherein the first regions define the unknown non-uniformity profile.

The computer program product of any preceding paragraph, wherein the image of the unknown sample support is an optical microscope image, and the one or more non-uniformities of the unknown sample support are provided at an internal material layer of the unknown sample support.

The computer program product of any preceding paragraph, wherein the program instructions are further executable by the processor to cause the processor to: determine, by the processor, a match of a second unknown sample support to a second known sample support based on the result of the comparing.

### Scientific Instrument System Description

Turning next to FIG. 19, a detailed description is provided of additional context for the one or more embodiments described herein at FIGS. 1-18. One or more computing devices implementing any of the scientific instrument modules or methods disclosed herein can be part of a scientific instrument system. FIG. 19 illustrates a block diagram of an example scientific instrument system 1900 in which one or more of the scientific instrument methods or other methods disclosed herein can be performed, in accordance with various embodiments described herein. The scientific instrument modules and methods disclosed herein (e.g., the scientific instrument module 100 of FIG. 1 and the method 200 of FIG. 2) can be implemented by one or more of the scientific instrument 1910, the user local computing device 1920, the service local computing device 1930, and/or the remote computing device 1940 of the scientific instrument system 1900.

Any of the scientific instrument 1910, the user local computing device 1920, the service local computing device 1930, and/or the remote computing device 1940 can include any of the embodiments of the computing device 400 discussed herein with reference to FIG. 4, and any of the scientific instrument 1910, the user local computing device 1920, the service local computing device 1930, and/or the remote computing device 1940 can take the form of any appropriate one or more of the embodiments of the computing device 400 discussed herein with reference to FIG. 4.

One or more of the scientific instruments 1910, the user local computing device 1920, the service local computing device 1930, and/or the remote computing device 1940 can include a processing device 1902, a storage device 1904, and/or an interface device 1906. The processing device 1902 can take any suitable form, including the form of any of the processors 402 discussed herein with reference to FIG. 4. The processing devices 1902 included in different ones of the scientific instrument 1910, the user local computing device 1920, the service local computing device 1930, and/or the remote computing device 1940 can take the same form or different forms. The storage device 1904 can take any suitable form, including the form of any of the storage devices 404 discussed herein with reference to FIG. 4. The storage devices 1904 included in different ones of the scientific instrument 1910, the user local computing device 1920, the service local computing device 1930, and/or the remote computing device 1940 can take the same form or different forms. The interface device 1906 can take any suitable form, including the form of any of the interface devices 406 discussed herein with reference to FIG. 4. The interface devices 1906 included in different ones of the scientific instrument 1910, the user local computing device 1920, the service local computing device 1930, and/or the remote computing device 1940 can take the same form or different forms.

The scientific instrument 1910, the user local computing device 1920, the service local computing device 1930, and/or the remote computing device 1940 can be in communication with other elements of the scientific instrument system 1900 via communication pathways 1908. The communication pathways 1908 can communicatively couple the interface devices 1906 of different ones of the elements of the scientific instrument system 1900, as shown, and can be wired or wireless communication pathways (e.g., in accordance with any of the communication techniques discussed herein with reference to the interface devices 406 of the computing device 400 of FIG. 4). The particular scientific instrument system 1900 depicted in FIG. 19 includes communication pathways between each pair of the scientific instrument 1910, the user local computing device 1920, the service local computing device 1930, and the remote computing device 1940, but this "fully connected" implementation is simply illustrative, and in various embodiments, various ones of the communication pathways 1908 can be omitted. For example, in one or more embodiments, a service local computing device 1930 can omit a direct communication pathway 1908 between its interface device 1906 and the interface device 1906 of the scientific instrument 1910, but can instead communicate with the scientific instrument 1910 via the communication pathway 1908 between the service local computing device 1930 and the user local computing device 1920 and/or the communication pathway 1908 between the user local computing device 1920 and the scientific instrument 1910.

The scientific instrument 1910 can include any appropriate scientific instrument, such as a separation or MS instrument, or other instrument facilitating material analysis.

The user local computing device 1920 can be a computing device (e.g., in accordance with any of the embodiments of the computing device 400 discussed herein) that is local to a user of the scientific instrument 1910. In one or more embodiments, the user local computing device 1920 can also be local to the scientific instrument 1910, but this need not be the case; for example, a user local computing device 1920 that is associated with a home, office or other building associated with a user entity can be remote from, but in communication with, the scientific instrument 1910 so that the user entity can use the user local computing device 1920 to control and/or access data from the scientific instrument 1910. In one or more embodiments, the user local computing device 1920 can be a laptop, smartphone, or tablet device. In one or more embodiments the user local computing device 1920 can be a portable computing device. In one or more embodiments, the user local computing device 1920 can deployed in the field.

The service local computing device 1930 can be a computing device (e.g., in accordance with any of the embodiments of the computing device 400 discussed herein) that is local to an entity that services the scientific instrument 1910. For example, the service local computing device 1930 can be local to a manufacturer of the scientific instrument 1910 or to a third-party service company. In one or more embodiments, the service local computing device 1930 can communicate with the scientific instrument 1910, the user local computing device 1920, and/or the remote computing device 1940 (e.g., via a direct communication pathway 1908 or via multiple "indirect" communication pathways 1908, as discussed above) to receive data regarding the operation of the scientific instrument 1910, the user local computing device 1920, and/or the remote computing device 1940 (e.g., the results of self-tests of the scientific instrument 1910, calibration coefficients used by the scientific instrument 1910, the measurements of sensors associated with the scientific instrument 1910, etc.). In one or more embodiments, the service local computing device 1930 can communicate with the scientific instrument 1910, the user local computing device 1920, and/or the remote computing device 1940 (e.g., via a direct communication pathway 1908 or via multiple "indirect" communication pathways 1908, as discussed above) to transmit data to the scientific instrument 1910, the user local computing device 1920, and/or the remote computing device 1940 (e.g., to update programmed instructions, such as firmware, in the scientific instrument 1910, to initiate the performance of test or calibration sequences in the scientific instrument 1910, to update programmed instructions, such as software, in the user local computing device 1920 or the remote computing device 1940, etc.). A user entity of the scientific instrument 1910 can utilize the scientific instrument 1910 or the user local computing device 1920 to communicate with the service local computing device 1930 to report a problem with the scientific instrument 1910 or the user local computing device 1920, to request a visit from a technician to improve the operation of the scientific instrument 1910, to order consumables or replacement parts associated with the scientific instrument 1910, or for other purposes.

The remote computing device 1940 can be a computing device (e.g., in accordance with any of the embodiments of the computing device 400 discussed herein) that is remote from the scientific instrument 1910 and/or from the user local computing device 1920. In one or more embodiments, the remote computing device 1940 can be included in a datacenter or other large-scale server environment. In one or more embodiments, the remote computing device 1940 can include network-attached storage (e.g., as part of the storage device 1904). The remote computing device 1940 can store data generated by the scientific instrument 1910, perform analyses of the data generated by the scientific instrument 1910 (e.g., in accordance with programmed instructions), facilitate communication between the user local computing device 1920 and the scientific instrument 1910, and/or facilitate communication between the service local computing device 1930 and the scientific instrument 1910.

In one or more embodiments, one or more of the elements of the scientific instrument system 1900 illustrated in FIG. 19 can be omitted. Further, in one or more embodiments, multiple ones of various ones of the elements of the scientific instrument system 1900 of FIG. 19 can be present. For example, a scientific instrument system 1900 can include multiple user local computing devices 1920 (e.g., different user local computing devices 1920 associated with different user entities or in different locations). In another example, a scientific instrument system 1900 can include multiple scientific instruments 1910, all in communication with service local computing device 1930 and/or a remote computing device 1940; in such an embodiment, the service local computing device 1930 can monitor these multiple scientific instruments 1910, and the service local computing device 1930 can cause updates or other information can be "broadcast" to multiple scientific instruments 1910 at the same time. Different ones of the scientific instruments 1910 in a scientific instrument system 1900 can be located close to one another (e.g., in the same room) or farther from one another (e.g., on different floors of a building, in different buildings, in different cities, etc.). In one or more embodiments, a scientific instrument 1910 can be connected to an Internet-of-Things (IoT) stack that allows for command and control of the scientific instrument 1910 through a web-based application, a virtual or augmented reality application, a mobile application, and/or a desktop application. Any of these applications can be accessed by a user entity operating the user local computing device 1920 in communication with the scientific instrument 1910 by the intervening remote computing device 1940. In one or more embodiments, a scientific instrument 1910 can be sold by the manufacturer along with one or more associated user local computing devices 1920 as part of a local scientific instrument computing unit 1912.

In one or more embodiments, different ones of the scientific instruments 1910 included in a scientific instrument system 1900 can be different types of scientific instruments 1910; for example, one scientific instrument 1910 can be an EDS device, while another scientific instrument 1910 can be an analysis device that analyzes results of an EDS device. In some such embodiments, the remote computing device 1940 and/or the user local computing device 1920 can combine data from different types of scientific instruments 1910 included in a scientific instrument system 1900.

### Example Operating Environment

FIG. 20 is a schematic block diagram of an operating environment 2000 with which the described subject matter can interact. The operating environment 2000 comprises one or more remote component(s) 2010. The remote component(s) 2010 can be hardware and/or software (e.g., threads, processes, computing devices). In one or more embodiments, remote component(s) 2010 can be a distributed computer system, connected to a local automatic scaling component and/or programs that use the resources of a distributed computer system, via communication framework 2040. Communication framework 2040 can comprise wired network devices, wireless network devices, mobile devices, wearable devices, radio access network devices, gateway devices, femtocell devices, servers, etc.

The operating environment 2000 also comprises one or more local component(s) 2020. The local component(s) 2020 can be hardware and/or software (e.g., threads, processes, computing devices). In one or more embodiments, local component(s) 2020 can comprise an automatic scaling component and/or programs that communicate/use the remote resources 2010 and 2020, etc., connected to a remotely located distributed computing system via communication framework 2040.

One possible communication between a remote component(s) 2010 and a local component(s) 2020 can be in the form of a data packet adapted to be transmitted between two or more computer processes. Another possible communication between a remote component(s) 2010 and a local component(s) 2020 can be in the form of circuit-switched data adapted to be transmitted between two or more computer processes in radio time slots. The operating environment 2000 comprises a communication framework 2040 that can be employed to facilitate communications between the remote component(s) 2010 and the local component(s) 2020, and can comprise an air interface, e.g., interface of a UMTS network, via an LTE network, etc. Remote component(s) 2010 can be operably connected to one or more remote data store(s) 2050, such as a hard drive, solid state drive, subscriber identity module (SIM) card, electronic SIM (eSIM), device memory, etc., that can be employed to store information on the remote component(s) 2010 side of communication framework 2040. Similarly, local component(s) 2020 can be operably connected to one or more local data store(s) 2030, that can be employed to store information on the local component(s) 2020 side of communication framework 2040.

### Example Computing Environment

In order to provide additional context for various embodiments described herein, FIG. 21 and the following discussion are intended to provide a brief, general description of a suitable computing environment 2100 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform tasks or implement abstract data types. Moreover, the methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Referring still to FIG. 21, the example computing environment 2100 which can implement one or more embodiments described herein includes a computer 2102, the computer 2102 including a processing unit 2104, a system memory 2106 and a system bus 2108. The system bus 2108 couples system components including, but not limited to, the system memory 2106 to the processing unit 2104. The processing unit 2104 can be any of various commercially available processors. Dual microprocessors and other multi processor architectures can also be employed as the processing unit 2104.

The system bus 2108 can be any of several types of bus structure that can further interconnect to a memory bus (with or without a memory controller), a peripheral bus, and a local bus using any of a variety of commercially available bus architectures. The system memory 2106 includes ROM 2110 and RAM 2112. A basic input/output system (BIOS) can be stored in a non-volatile memory such as ROM, erasable programmable read only memory (EPROM), EEPROM, which BIOS contains the basic routines that help to transfer information between elements within the computer 2102, such as during startup. The RAM 2112 can also include a high-speed RAM such as static RAM for caching data.

The computer 2102 further includes an internal hard disk drive (HDD) 2114 (e.g., EIDE, SATA), and can include one or more external storage devices 2116 (e.g., a magnetic floppy disk drive (FDD) 2116, a memory stick or flash drive reader, a memory card reader, etc.). While the internal HDD 2114 is illustrated as located within the computer 2102, the internal HDD 2114 can also be configured for external use in a suitable chassis (not shown). Additionally, while not shown in computing environment 2100, a solid-state drive (SSD) could be used in addition to, or in place of, an HDD 2114.

Other internal or external storage can include at least one other storage device 2121 with storage media 2122 (e.g., a solid-state storage device, a nonvolatile memory device, and/or an optical disk drive that can read or write from removable media such as a CD-ROM disc, a DVD, a BD, etc.). The external storage 2116 can be facilitated by a network virtual machine. The HDD 2114, external storage device 2116 and storage device (e.g., drive) 2121 can be connected to the system bus 2108 by an HDD interface 2124, an external storage interface 2126 and a drive interface 2128, respectively.

The drives and their associated computer-readable storage media provide nonvolatile storage of data, data structures, computer-executable instructions, and so forth. For the computer 2102, the drives and storage media accommodate the storage of any data in a suitable digital format. Although the description of computer-readable storage media above refers to respective types of storage devices, other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2112, including an operating system 2130, one or more application programs 2132, other program modules 2134 and program data 2136. All or portions of the operating system, applications, modules, and/or data can also be cached in the RAM 2112. The systems and methods described herein can be implemented utilizing various commercially available operating systems or combinations of operating systems.

Computer 2102 can optionally comprise emulation technologies. For example, a hypervisor (not shown) or other intermediary can emulate a hardware environment for operating system 2130, and the emulated hardware can optionally be different from the hardware illustrated in FIG. 21. In such an embodiment, operating system 2130 can comprise one virtual machine (VM) of multiple VMs hosted at computer 2102. Furthermore, operating system 2130 can provide runtime environments, such as the Java runtime environment or the .NET framework, for applications 2132. Runtime environments are consistent execution environments that allow applications 2132 to run on any operating system that includes the runtime environment. Similarly, operating system 2130 can support containers, and applications 2132 can be in the form of containers, which are lightweight, standalone, executable packages of software that include, e.g., code, runtime, system tools, system libraries and settings for an application.

Further, computer 2102 can be enabled with a security module, such as a trusted processing module (TPM). For instance, with a TPM, boot components hash next in time boot components, and wait for a match of results to secured values, before loading a next boot component. This process can take place at any layer in the code execution stack of computer 2102, e.g., applied at the application execution level or at the operating system (OS) kernel level, thereby enabling security at any level of code execution.

A user entity can enter commands and information into the computer 2102 through one or more wired/wireless input devices, e.g., a keyboard 2138, a touch screen 2140, and a pointing device, such as a mouse 2142. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera, a gesture sensor input device, a vision movement sensor input device, an emotion or facial detection device, a biometric input device, e.g., fingerprint or iris scanner, or the like. These and other input devices are often connected to the processing unit 2104 through an input device interface 2144 that can be coupled to the system bus 2108, but can be connected by other interfaces, such as a parallel port, an IEEE 1394 serial port, a game port, a USB port, an IR interface, a BLUETOOTH^{®} interface, etc.

A monitor 2146 or other type of display device can also be connected to the system bus 2108 via an interface, such as a video adapter 2148. In addition to the monitor 2146, a computer typically includes other peripheral output devices (not shown), such as speakers, printers, etc.

The computer 2102 can operate in a networked environment using logical connections via wired and/or wireless communications to one or more remote computers, such as a remote computer 2150. The remote computer 2150 can be a workstation, a server computer, a router, a personal computer, portable computer, microprocessor-based entertainment appliance, a peer device or other common network node, and typically includes many or all of the elements described relative to the computer 2102, although, for purposes of brevity, only a memory/storage device 2152 is illustrated. The logical connections depicted include wired/wireless connectivity to a local area network (LAN) 2154 and/or larger networks, e.g., a wide area network (WAN) 2156. Such LAN and WAN networking environments are commonplace in offices and companies, and facilitate enterprise-wide computer networks, such as intranets, all of which can connect to a global communications network, e.g., the Internet.

When used in a LAN networking environment, the computer 2102 can be connected to the local network 2154 through a wired and/or wireless communication network interface or adapter 2158. The adapter 2158 can facilitate wired or wireless communication to the LAN 2154, which can also include a wireless access point (AP) disposed thereon for communicating with the adapter 2158 in a wireless mode.

When used in a WAN networking environment, the computer 2102 can include a modem 2160 or can be connected to a communications server on the WAN 2156 via other means for establishing communications over the WAN 2156, such as by way of the Internet. The modem 2160, which can be internal or external and a wired or wireless device, can be connected to the system bus 2108 via the input device interface 2144. In a networked environment, program modules depicted relative to the computer 2102 or portions thereof, can be stored in the remote memory/storage device 2152. The network connections shown are example and other means of establishing a communications link between the computers can be used.

When used in either a LAN or WAN networking environment, the computer 2102 can access cloud storage systems or other network-based storage systems in addition to, or in place of, external storage devices 2116 as described above. Generally, a connection between the computer 2102 and a cloud storage system can be established over a LAN 2154 or WAN 2156 e.g., by the adapter 2158 or modem 2160, respectively. Upon connecting the computer 2102 to an associated cloud storage system, the external storage interface 2126 can, with the aid of the adapter 2158 and/or modem 2160, manage storage provided by the cloud storage system as it would other types of external storage. For instance, the external storage interface 2126 can be configured to provide access to cloud storage sources as if those sources were physically connected to the computer 2102.

The computer 2102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a defined structure as with an existing network or simply an ad hoc communication between at least two devices.

### Additional Information

The embodiments described herein can be directed to one or more of a system, a method, an apparatus and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a superconducting storage device and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, is not to be construed as being transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein can be downloaded to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA) and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function. In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter has been described above in the general context of computer-executable instructions of a computer program product that runs on a computer and/or computers, those skilled in the art will recognize that the one or more embodiments herein also can be implemented at least partially in parallel with one or more other program modules. Generally, program modules include routines, programs, components and/or data structures that perform particular tasks and/or implement particular abstract data types. Moreover, the aforedescribed computer-implemented methods can be practiced with other computer system configurations, including single-processor and/or multiprocessor computer systems, mini-computing devices, mainframe computers, as well as computers, hand-held computing devices (e.g., PDA, phone), and/or microprocessor-based or programmable consumer and/or industrial electronics. The illustrated aspects can also be practiced in distributed computing environments in which tasks are performed by remote processing devices that are linked through a communications network. However, one or more, if not all aspects of the one or more embodiments described herein can be practiced on stand-alone computers. In a distributed computing environment, program modules can be located in both local and remote memory storage devices.

As used in this application, the terms "component," "system," "platform" and/or "interface" can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter described herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular and quantum-dot based transistors, switches and/or gates, in order to optimize space usage and/or to enhance performance of related equipment. A processor can be implemented as a combination of computing processing units.

Herein, terms such as "store," "storage," "data store," data storage," "database," and substantially any other information storage component relevant to operation and functionality of a component are utilized to refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory and/or nonvolatile random-access memory (RAM) (e.g., ferroelectric RAM (FeRAM). Volatile memory can include RAM, which can act as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein are intended to include, without being limited to including, these and/or any other suitable types of memory.

What has been described above includes mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the various embodiments can use the phrases "an embodiment," "various embodiments," "one or more embodiments" and/or "some embodiments," each of which can refer to one or more of the same or different embodiments.

The descriptions of the various embodiments have been presented for purposes of illustration but are not intended to be exhaustive or limited to the embodiments described herein. Many modifications and variations will be apparent to those of ordinary skill in the art without departing from the scope and spirit of the described embodiments. The terminology used herein was chosen to best explain the principles of the embodiments, the practical application and/or technical improvement over technologies found in the marketplace, and/or to enable others of ordinary skill in the art to understand the embodiments described herein.

Additional aspects of systems and methods taught herein are expressed in the following examples.

Example 1. A system, comprising: a memory that stores computer executable components; and a processor that executes the computer executable components stored in the memory, wherein the computer executable components comprise: an imaging component that captures an image of an unknown sample support comprising a material layer; and a matching component that matches the unknown sample support to a known sample support based on an unknown non-uniformity profile comprising one or more non-uniformities of the material layer in the image of the unknown sample support.

Example 2. The system of Example 1, further comprising: a comparing component that compares the unknown non-uniformity profile of the image of the unknown sample support to a known non-uniformity profile of an image of the known sample support and generates a comparison score based on the comparing, wherein the comparison score comprises a value that defines a similarity level between the unknown non-uniformity profile of the unknown sample support and the known non-uniformity profile of the known sample support.

Example 3. The system of Example 2, further comprising: wherein the matching component further matches the unknown sample support to the known sample support based on the comparison score comprising a highest value as compared to one or more other comparison scores generated by the comparing component relative to another image of another unknown sample support or of another known sample support.

Example 4. The system of any one of Examples 1-3, wherein the image of the unknown sample support comprises a set of peripherally-located first regions having a greater luminosity and bounding a central second region having a lesser luminosity, and wherein the first regions define the unknown non-uniformity profile.

Example 5. The system of any one of Examples 1-4, wherein the image of the unknown sample support is an optical microscope image, and the material layer comprises a silicon frame.

Example 6. The system of Example 2, further comprising: an obtaining component that obtains a set of images of known sample supports, including the image of the known sample support.

Example 7. The system of any one of Examples 1-6, further comprising: a notifying component that generates a notification defining whether the match was generated corresponding to the unknown sample support.

Example 8. A computer-implemented method, comprising: capturing, by a system operatively coupled to a processor, an image of an unknown sample support comprising a material layer; and matching, by the system, the unknown sample support to a known sample support based on matching of one or more unknown non-uniformities of the material layer in the image of the unknown sample support to one or more known non-uniformities in an image of the known sample support.

Example 9. The computer-implemented method of Example 8, further comprising: comparing, by the system, the one or more unknown non-uniformities of the image of the unknown sample support to the one or more known non-uniformities of the known sample support; and generating, by the system, a comparison score based on the comparing, wherein the comparison score comprises a value that defines a similarity level between the one or more unknown non-uniformities of the unknown sample support and the one or more known non-uniformities of the known sample support.

Example 10. The computer-implemented method of Example 9, wherein the matching further comprises matching, by the system, the unknown sample support to the known sample support based on the comparison score comprising a highest value as compared to one or more other comparison scores, generated by the comparing, relative to another image of another unknown sample support or of another known sample support.

Example 11. The computer-implemented method of Example 9, wherein the matching further comprises: aggregating, by the system, the comparison score with a parameter score that is based on a comparison of a secondary parameter of the unknown sample support, related to other than the one or more unknown non-uniformities, and a corresponding secondary parameter of the known sample support, related to other than the one or more known non-uniformities, and matching, by the system, the unknown sample support to the known sample support based on an aggregated score, resulting from the aggregating, comprising a highest value as compared to one or more other aggregated scores, generated by the comparing and aggregating, relative to another image of another unknown sample support or of another known sample support.

Example 12. The computer-implemented method of any one of Examples 8-11, wherein the image of the unknown sample support comprises a set of peripherally-located first regions having a greater luminosity and bounding a central second region having a lesser luminosity, and wherein the first regions are the one or more unknown non-uniformities.

Example 13. The computer-implemented method of Example 9, further comprising: updating, by the system, a data record associated with the known sample to reference the unknown sample.

Example 14. The computer-implemented method of any one of Examples 8-13, further comprising: generating, by the system, a notification defining whether the match was generated corresponding to the unknown sample support.

Example 15. A computer program product facilitating a process for sample support recognition, the computer program product comprising a computer readable storage medium having program instructions embodied therewith, and the program instructions executable by a processor to cause the processor to: compare, by the processor, an unknown non-uniformity profile comprising one or more non-uniformities of an unknown sample support, at an image of the unknown sample support, to a known non-uniformity profile of an image of a known sample support; and based on a result of the comparing, identify, by the processor, the unknown sample support as being the known sample support.

Example 16. The computer program product of Example 15, wherein the program instructions are further executable by the processor to cause the processor to: generate, by the processor, a comparison score based on the comparing, wherein the comparison score comprises a value that defines a similarity level between the unknown non-uniformity profile of the unknown sample support and the known non-uniformity profile of the known sample support.

Example 17. The computer program product of Example 16, wherein the program instructions executable by the processor to cause the processor to: match, by the processor, the unknown sample support to the known sample support based on the comparison score comprising a highest value as compared to one or more other comparison scores, generated by the comparing, relative to another image of another unknown sample support or of another known sample support.

Example 18. The computer program product of any one of Examples 15-17, wherein the image of the unknown sample support comprises a set of peripherally-located first regions having a greater luminosity and bounding a central second region having a lesser luminosity, and wherein the first regions define the unknown non-uniformity profile.

Example 19. The computer program product of any one of Examples 15-18, wherein the image of the unknown sample support is an optical microscope image, and the one or more non-uniformities of the unknown sample support are provided at an internal material layer of the unknown sample support.

Example 20. The computer program product of Example 16, wherein the program instructions are further executable by the processor to cause the processor to: determine, by the processor, a match of a second unknown sample support to a second known sample support based on the result of the comparing.

## Claims

1. A system, comprising:
a memory that stores computer executable components; and
a processor that executes the computer executable components stored in the memory, wherein the computer executable components comprise:
an imaging component that captures an image of an unknown sample support comprising a material layer; and
a matching component that matches the unknown sample support to a known sample support based on an unknown non-uniformity profile comprising one or more non-uniformities of the material layer in the image of the unknown sample support.

2. The system of claim 1, further comprising:
a comparing component that compares the unknown non-uniformity profile of the image of the unknown sample support to a known non-uniformity profile of an image of the known sample support and generates a comparison score based on the comparing,
wherein the comparison score comprises a value that defines a similarity level between the unknown non-uniformity profile of the unknown sample support and the known non-uniformity profile of the known sample support.

3. The system of claim 2, further comprising:
wherein the matching component further matches the unknown sample support to the known sample support based on the comparison score comprising a highest value as compared to one or more other comparison scores generated by the comparing component relative to another image of another unknown sample support or of another known sample support.

4. The system of any one of claims 1-3,
wherein the image of the unknown sample support comprises a set of peripherally-located first regions having a greater luminosity and bounding a central second region having a lesser luminosity, and
wherein the first regions define the unknown non-uniformity profile.

5. The system of any one of claims 1-4, wherein the image of the unknown sample support is an optical microscope image, and the material layer comprises a silicon frame.

6. The system of claim 2, further comprising:
an obtaining component that obtains a set of images of known sample supports, including the image of the known sample support.

7. The system of any one of claims 1-6, further comprising:
a notifying component that generates a notification defining whether the match was generated corresponding to the unknown sample support.

8. A computer-implemented method, comprising:
capturing, by a system operatively coupled to a processor, an image of an unknown sample support comprising a material layer; and
matching, by the system, the unknown sample support to a known sample support based on matching of one or more unknown non-uniformities of the material layer in the image of the unknown sample support to one or more known non-uniformities in an image of the known sample support.

9. The computer-implemented method of claim 8, further comprising:
comparing, by the system, the one or more unknown non-uniformities of the image of the unknown sample support to the one or more known non-uniformities of the known sample support; and
generating, by the system, a comparison score based on the comparing,
wherein the comparison score comprises a value that defines a similarity level between the one or more unknown non-uniformities of the unknown sample support and the one or more known non-uniformities of the known sample support.

10. The computer-implemented method of claim 9,
wherein the matching further comprises matching, by the system, the unknown sample support to the known sample support based on the comparison score comprising a highest value as compared to one or more other comparison scores, generated by the comparing, relative to another image of another unknown sample support or of another known sample support.

11. The computer-implemented method of claim 9,
wherein the matching further comprises:
aggregating, by the system, the comparison score with a parameter score that is based on a comparison of a secondary parameter of the unknown sample support, related to other than the one or more unknown non-uniformities, and a corresponding secondary parameter of the known sample support, related to other than the one or more known non-uniformities, and
matching, by the system, the unknown sample support to the known sample support based on an aggregated score, resulting from the aggregating, comprising a highest value as compared to one or more other aggregated scores, generated by the comparing and aggregating, relative to another image of another unknown sample support or of another known sample support.

12. The computer-implemented method of any one of claims 8-11,
wherein the image of the unknown sample support comprises a set of peripherally-located first regions having a greater luminosity and bounding a central second region having a lesser luminosity, and
wherein the first regions are the one or more unknown non-uniformities.

13. The computer-implemented method of claim 9, further comprising:
updating, by the system, a data record associated with the known sample to reference the unknown sample.

14. The computer-implemented method of any one of claims 8-13, further comprising:
generating, by the system, a notification defining whether the match was generated corresponding to the unknown sample support.

15. A computer program product facilitating a process for sample support recognition, the computer program product comprising a computer readable storage medium having program instructions embodied therewith, and the program instructions executable by a processor to cause the processor to execute the computer-implemented method of any one of claims 8-14:
